# EUROPEAN PATENT APPLICATION

(11) **EP 4 125 022 A1**
(43) Date of publication of application: **01.02.2023**
(21) Application number: 22175100.1
(22) Date of filing: 24.05.2022
(51) Int. Cl.: G06Q 30/02, G06Q 30/06

(54) **METHOD AND APPARATUS FOR PROCESSING RESOURCES**

(30) Priority: 26.07.2021 CN 202110846542
(71) Applicant: Beijing Dajia Internet Information Technology Co., Ltd., Beijing 100085 (CN)
(72) Inventor: ZHENG, Ao, Beijing, 100085 (CN); LIU, Yanlong, Beijing, 100085 (CN); WANG, Chong, Beijing, 100085 (CN); XUE, Bo, Beijing, 100085 (CN); WANG, Jing, Beijing, 100085 (CN)
(74) Representative: Yang, Shu

(57) **Abstract**

Provided is a method and an apparatus for processing resources, belonging to the field of Internet technologies. The method includes: displaying (S201), in response to a trigger operation on a target adjustment control, a task page of a target adjustment task; sending (S202), in response to a trigger operation on the first invitation control, adjustment task information to other one or more accounts; and updating (S203), upon completion of the target adjustment task, a state of a target resource based on the target quantity required for updating the state of the target resource.

## Description

### TECHNICAL FIELD

The present disclosure relates to the field of Internet technologies, and in particular, relates to a method and an apparatus for processing resources.

### BACKGROUND

The development of Internet technologies has contributed to improved integration of e-commerce and live streaming, and live-streaming shopping is getting more and more popular. Platforms and merchants that support live-streaming shopping often hold a variety of activities to attract more users to participate in live-streaming shopping.

### SUMMARY

Embodiments of the present disclosure provide a method and an apparatus for processing resources. The technical solutions of the present disclosure are as follows.

In one aspect of the embodiments of the present disclosure, a method for processing resources is provided. The method includes: displaying, in response to a trigger operation on a target adjustment control in a live-streaming room, a task page of a target adjustment task in the live-streaming room, wherein the task page has participation prompt information and a first invitation control displayed thereon, wherein the participation prompt information indicates an operation required to be performed to complete the target adjustment task upon completion of the trigger operation, the target adjustment task is to adjust a quantity of virtual resources required for updating a state of a target resource to a target quantity, and the first invitation control is configured to invite other one or more accounts to participate in the target adjustment task; and the target adjustment control is configured to adjust the quantity of virtual resources required for updating the state of the target resource; sending, in response to a trigger operation on the first invitation control, adjustment task information indicating the target adjustment task to other accounts; and updating, upon completion of the target adjustment task, the state of the target resource based on the target quantity.

In another aspect of the embodiments of the present disclosure, a method for processing resources is provided. The method includes: acquiring adjustment task information of a live-streaming room, wherein the adjustment task information indicates a target adjustment task for a target resource in the live-streaming room, and the target adjustment task is to adjust a quantity of virtual resources required for updating a state of the target resource to a target quantity; displaying a participation control based on the adjustment task information, wherein the participation control indicates participation in the target adjustment task; displaying, in response to a trigger operation on the participation control, a task page of the target adjustment task in the live-streaming room, wherein the task page has participation prompt information and a third invitation control displayed thereon, wherein the participation prompt information indicates an operation required to be performed to complete the target adjustment task upon completion of the trigger operation, and the third invitation control is configured to invite other one or more accounts to participate in the target adjustment task; sending, in response to a trigger operation on the third invitation control, the adjustment task information to other accounts; and updating, upon completion of the target adjustment task, the state of the target resource based on the target quantity.

In yet another aspect of an embodiment of the present disclosure, an apparatus for processing resources is provided. The apparatus includes: a first task page displaying unit, configured to display, in response to a trigger operation on a target adjustment control in a live-streaming room, a task page of a target adjustment task in the live-streaming room, wherein the task page has participation prompt information and a first invitation control displayed thereon, wherein the participation prompt information indicates an operation required to be performed to complete the target adjustment task upon completion of the trigger operation, the target adjustment task is to adjust a quantity of virtual resources required for updating a state of a target resource to a target quantity, and the first invitation control is configured to invite other one or more accounts to participate in the target adjustment task; and the target adjustment control is configured to adjust the quantity of virtual resources required for updating the state of the target resource; a first sending unit, configured to send, in response to a trigger operation on the first invitation control, adjustment task information indicating the target adjustment task to other accounts; and a first state updating unit, configured to update, upon completion of the target adjustment task, the state of the target resource based on the target quantity.

In another aspect of the embodiments of the present disclosure, an apparatus for processing resources is provided. The apparatus includes: an information acquiring unit, configured to acquire adjustment task information of a live-streaming room, wherein the adjustment task information indicates a target adjustment task for a target resource in the live-streaming room, and the target adjustment task is to adjust a quantity of virtual resources required for updating a state of the target resource to a target quantity; a participation control displaying unit, configured to display a participation control based on the adjustment task information, wherein the participation control indicates participation in the target adjustment task; a second task page displaying unit, configured to display, in response to a trigger operation on the participation control, a task page of the target adjustment task in the live-streaming room, wherein the task page has participation prompt information and a third invitation control displayed thereon, wherein the participation prompt information indicates an operation required to be performed to complete the target adjustment task upon completion of the trigger operation, and the third invitation control is configured to invite other one or more accounts to participate in the target adjustment task; a second sending unit, configured to send, in response to a trigger operation on the third invitation control, the adjustment task information to other accounts; and a second state updating unit, configured to update, upon completion of the target adjustment task, the state of the target resource based on the target quantity.

In yet another aspect of an embodiment of the present disclosure, a terminal is provided. The terminal includes: one or more processors; and a memory for storing one or more instructions executable by the processors; wherein the one or more instructions, when loaded and executed by the processors, cause the processors to perform: displaying, in response to a trigger operation on a target adjustment control in a live-streaming room, a task page of a target adjustment task in the live-streaming room, wherein the task page has participation prompt information and a first invitation control displayed thereon, wherein the participation prompt information indicates an operation required to be performed to complete the target adjustment task upon completion of the trigger operation, the target adjustment task is to adjust a quantity of virtual resources required for updating a state of a target resource to a target quantity, and the first invitation control is configured to invite other one or more accounts to participate in the target adjustment task; and the target adjustment control is configured to adjust the quantity of virtual resources required for updating the state of the target resource; sending, in response to a trigger operation on the first invitation control, adjustment task information indicating the target adjustment task to other accounts; and updating, upon completion of the target adjustment task, the state of the target resource based on the target quantity; or, the one or more instructions, when loaded and executed by the processors, cause the processors to perform: acquiring adjustment task information of a live-streaming room, wherein the adjustment task information indicates a target adjustment task for a target resource in the live-streaming room, and the target adjustment task is to adjust a quantity of virtual resources required for updating a state of the target resource to a target quantity; displaying a participation control based on the adjustment task information, wherein the participation control indicates participation in the target adjustment task; displaying, in response to a trigger operation on the participation control, a task page of the target adjustment task in the live-streaming room, wherein the task page has participation prompt information and a third invitation control displayed thereon, wherein the participation prompt information indicates an operation required to be performed to complete the target adjustment task upon completion of the trigger operation, and the third invitation control is configured to invite other one or more accounts to participate in the target adjustment task; sending, in response to a trigger operation on the third invitation control, the adjustment task information to other accounts; and updating, upon completion of the target adjustment task, the state of the target resource based on the target quantity.

In still another aspect of embodiments of the present disclosure, a computer-readable storage medium storing one or more instructions is provided. The one or more instructions, when loaded and executed by a processor of a terminal, cause the terminal to perform: displaying, in response to a trigger operation on a target adjustment control in a live-streaming room, a task page of a target adjustment task in the live-streaming room, wherein the task page has participation prompt information and a first invitation control displayed thereon, wherein the participation prompt information indicates an operation required to be performed to complete the target adjustment task upon completion of the trigger operation, the target adjustment task is to adjust a quantity of virtual resources required for updating a state of a target resource to a target quantity, and the first invitation control is configured to invite other one or more accounts to participate in the target adjustment task; and the target adjustment control is configured to adjust the quantity of virtual resources required for updating the state of the target resource; sending, in response to a trigger operation on the first invitation control, adjustment task information indicating the target adjustment task to other accounts; and updating, upon completion of the target adjustment task, the state of the target resource based on the target quantity; or, the one or more instructions, when loaded and executed by a processor of a terminal, cause the terminal to perform: acquiring adjustment task information of a live-streaming room, wherein the adjustment task information indicates a target adjustment task for a target resource in the live-streaming room, and the target adjustment task is to adjust a quantity of virtual resources required for updating a state of the target resource to a target quantity; displaying a participation control based on the adjustment task information, wherein the participation control indicates participation in the target adjustment task; displaying, in response to a trigger operation on the participation control, a task page of the target adjustment task in the live-streaming room, wherein the task page has participation prompt information and a third invitation control displayed thereon, wherein the participation prompt information indicates an operation required to be performed to complete the target adjustment task upon completion of the trigger operation, and the third invitation control is configured to invite other one or more accounts to participate in the target adjustment task; sending, in response to a trigger operation on the third invitation control, the adjustment task information to other accounts; and updating, upon completion of the target adjustment task, the state of the target resource based on the target quantity.

In still another aspect of an embodiment of the present disclosure, a computer program product including a computer program is provided. The computer program, when loaded and run by a processor, causes the processor to perform: displaying, in response to a trigger operation on a target adjustment control in a live-streaming room, a task page of a target adjustment task in the live-streaming room, wherein the task page has participation prompt information and a first invitation control displayed thereon, wherein the participation prompt information indicates an operation required to be performed to complete the target adjustment task upon completion of the trigger operation, the target adjustment task is to adjust a quantity of virtual resources required for updating a state of a target resource to a target quantity, and the first invitation control is configured to invite other one or more accounts to participate in the target adjustment task; and the target adjustment control is configured to adjust the quantity of virtual resources required for updating the state of the target resource; sending, in response to a trigger operation on the first invitation control, adjustment task information indicating the target adjustment task to other accounts; and updating, upon completion of the target adjustment task, the state of the target resource based on the target quantity; or, the computer program, when loaded and run by a processor, causes the processor to perform: acquiring adjustment task information of a live-streaming room, wherein the adjustment task information indicates a target adjustment task for a target resource in the live-streaming room, and the target adjustment task is to adjust a quantity of virtual resources required for updating a state of the target resource to a target quantity; displaying a participation control based on the adjustment task information, wherein the participation control indicates participation in the target adjustment task; displaying, in response to a trigger operation on the participation control, a task page of the target adjustment task in the live-streaming room, wherein the task page has participation prompt information and a third invitation control displayed thereon, wherein the participation prompt information indicates an operation required to be performed to complete the target adjustment task upon completion of the trigger operation, and the third invitation control is configured to invite other one or more accounts to participate in the target adjustment task; sending, in response to a trigger operation on the third invitation control, the adjustment task information to other accounts; and updating, upon completion of the target adjustment task, the state of the target resource based on the target quantity.

### BRIEF DESCRIPTION OF THE DRAWINGS

FIG. 1 is a schematic diagram of an implementation environment according to an exemplary embodiment of the present disclosure;
FIG. 2 is a schematic flowchart of a method for processing resources according to an exemplary embodiment of the present disclosure;
FIG. 3 is a schematic flowchart of another method for processing resources according to an exemplary embodiment of the present disclosure;
FIG. 4 is a schematic flowchart of still another method for processing resources according to an exemplary embodiment of the present disclosure;
FIG. 5 is a schematic diagram of displaying a target adjustment control according to an exemplary embodiment of the present disclosure;
FIG. 6 is a schematic diagram of resources processing flow according to an exemplary embodiment of the present disclosure;
FIG. 7 is a schematic diagram of a task page according to an exemplary embodiment of the present disclosure;
FIG. 8 is a schematic diagram of another task page according to an exemplary embodiment of the present disclosure;
FIG. 9 is a schematic diagram of still another task page according to an exemplary embodiment of the present disclosure;
FIG. 10 is a schematic diagram of a first animation according to an exemplary embodiment of the present disclosure;
FIG. 11 is a schematic diagram of another first animation according to an exemplary embodiment of the present disclosure;
FIG. 12 is a schematic diagram of an information-sharing pop-up window according to an exemplary embodiment of the present disclosure;
FIG. 13 is a schematic diagram of a participation control according to an exemplary embodiment of the present disclosure;
FIG. 14 is a schematic diagram of a second animation according to an exemplary embodiment of the present disclosure;
FIG. 15 is a schematic diagram of a task success page according to an exemplary embodiment of the present disclosure;
FIG. 16 is a schematic diagram of a state update page according to an exemplary embodiment of the present disclosure;
FIG. 17 is a schematic diagram of an update success page according to an exemplary embodiment of the present disclosure;
FIG. 18 is a schematic diagram of a target picture according to an exemplary embodiment of the present disclosure;
FIG. 19 is a schematic diagram of a participation rejection prompt box according to an exemplary embodiment of the present disclosure;
FIG. 20 is a schematic diagram of a limit prompt box according to an exemplary embodiment of the present disclosure;
FIG. 21 is a schematic diagram of a fourth animation according to an exemplary embodiment of the present disclosure;
FIG. 22 is a schematic diagram of a prompt box according to an exemplary embodiment of the present disclosure;
FIG. 23 is a schematic diagram of a task end page according to an exemplary embodiment of the present disclosure;
FIG. 24 is a schematic diagram of another task end page according to an exemplary embodiment of the present disclosure;
FIG. 25 is a schematic diagram of a record ranking list page according to an exemplary embodiment of the present disclosure;
FIG. 26 is a schematic diagram of a ranking list page according to an exemplary embodiment of the present disclosure;
FIG. 27 is a schematic diagram of an information page according to an exemplary embodiment of the present disclosure;
FIG. 28 is a schematic diagram of another ranking list page according to an exemplary embodiment of the present disclosure;
FIG. 29 is a block diagram of an apparatus for processing resources according to an exemplary embodiment of the present disclosure;
FIG. 30 is a block diagram of another apparatus for processing resources according to an exemplary embodiment of the present disclosure;
FIG. 31 is a block diagram of a terminal according to an exemplary embodiment of the present disclosure; and
FIG. 32 is a block diagram of a server according to an exemplary embodiment of the present disclosure.

### DETAILED DESCRIPTION

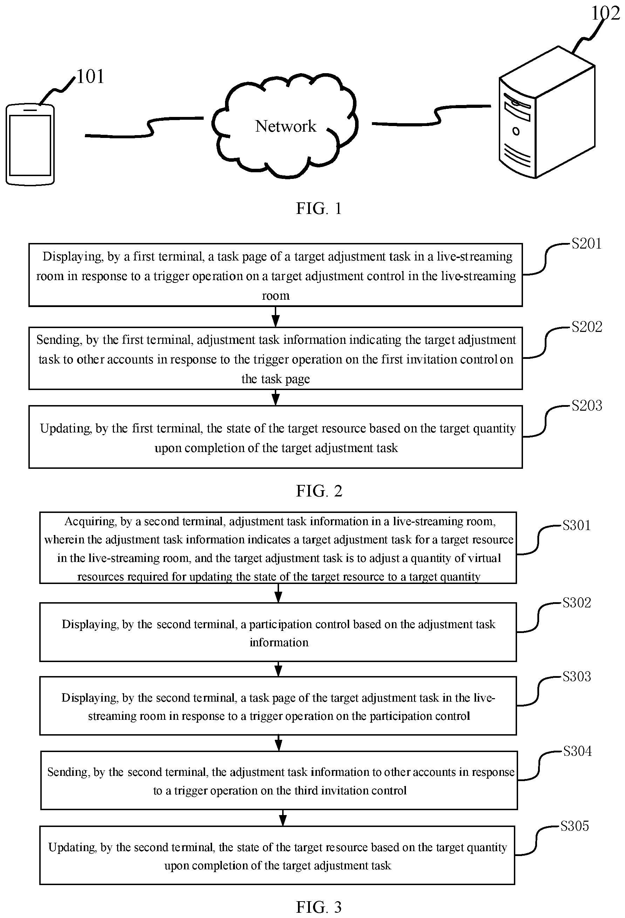

FIG. 1 is a schematic diagram of an implementation environment according to an exemplary embodiment. Referring to FIG. 1, the implementation environment includes a terminal 101 and a server 102.

The terminal 101 is a smartphone, a tablet computer, a portable computer, or a desktop computer, but is not limited thereto. In some embodiments, various applications, such as a video application, a shopping application, a social application, or a browser application, are installed on the terminal 101. The user enters the live-streaming room through an application installed on the terminal 101 and views the live streaming. The video application includes a short video application, in some embodiments, the terminal 101 is provided with a short video application, and a user enters a live-streaming room through the short video application and views the live streaming.

The server 102 is one server, a plurality of servers, a cloud server, a cloud computing platform, or a virtualization center. The server 102 and the terminal 101 are directly or indirectly connected via wired or wireless communication, and the server 102 provides a background service for the terminal 101 to play live video data by sending live video data of an anchor account to the terminal 101. The terminal where the anchor account is logged in captures live video data in response to an operation of starting live streaming and sends the live video data to the server 102; the server 102 receives the live video data, and sends the live video data to the terminal 101 in the case that an account logged in on the terminal 101 is a viewer account corresponding to the anchor account; the terminal 101 receives the live video data and plays the live video data.

It should be noted that the terminal 101 generally refers to one of a plurality of terminals, and the embodiments of the present disclosure only use the terminal 101 as an example for description. A person skilled in the art can know that the number of the above terminals may be more or less than that shown above. For example, the number of the terminals is only a few, dozens, hundreds, and the number of terminals and the types of devices is not limited to the embodiments of the present disclosure. In addition, the number of the above servers may be more or less, which is not limited to the embodiments of the present disclosure. In some embodiments, the server 102 also includes other functional servers to provide more comprehensive and diverse services.

FIG. 2 is a flowchart of a method for processing resources according to an exemplary embodiment, and the method for processing resources is briefly described below in combination with FIG. 2. Referring to FIG. 2, the method for processing resources is executed by a first terminal and includes the following processes.

In S201, the first terminal displays a task page of a target adjustment task in a live-streaming room in response to a trigger operation on a target adjustment control in the live-streaming room.

The target adjustment control is displayed in the live-streaming room, and the target adjustment control is configured to adjust a quantity of virtual resources required for updating a state of a target resource. The live-streaming room is a virtual room for playing live video data of an anchor account. In some embodiments, the first terminal displays a cover of the live-streaming room corresponding to a plurality of anchor accounts, and a user triggers the first terminal to enter a live-streaming room corresponding to any anchor account by operating on the cover of the live-streaming room corresponding to anchor account, wherein live video data corresponding to the anchor account is displayed in the live-streaming room. The user in the embodiments of the present disclosure is a viewer in the live-streaming room. The anchor introduces the target resource to the user by recording an introduction of the target resource into the live video data, to attract the user to purchase the target resource.

The state of the target resource is updated in the live-streaming room, and the state updating refers to updating the state of the target resource to a state that the target resource is possessed by an account of the user who purchases the target resource. The state of the target resource is updated by the first terminal on the premise of receiving virtual resources transferred by the user, that is, the target resource is a resource traded in the live-streaming room, and the user transfers the virtual resources to a designated account by operating on a page displayed in the live-streaming room to purchase the target resource. A quantity of virtual resources is configured to indicate a value of the target resource, that is, an amount of money required to acquire the target resource.

The type of the target resource is not limited to the embodiments of the present disclosure, for example, the target resource is a physical product such as food, clothing, and ornaments, or a virtual product such as a coupon, and virtual service.

In some embodiments, the anchor creates a resource quantity adjustment activity for the target resource on a terminal after the anchor account is logged in on the terminal. The terminal sends activity information of the resource quantity adjustment activity to the server, wherein the activity information at least indicates that a quantity of virtual resources corresponding to the target resource can be adjusted through the resource quantity adjustment activity, wherein the quantity of virtual resources corresponding to the target resource is the quantity of virtual resources required for updating the state of the target resource. The server sends the activity information to the first terminal in response to the first terminal entering the live-streaming room corresponding to the anchor account; and the first terminal displays the target adjustment control of the target resource in the live-streaming room based on the activity information.

The trigger operation involved in the embodiments of the present disclosure is a click operation, a swipe operation, an air gesture operation or a voice instruction operation, and the like, which is not limited to the embodiments of the present disclosure. The target adjustment task is to adjust the quantity of virtual resources required for updating the state of the target resource to the target quantity. The task page has participation prompt information and a first invitation control displayed thereon. The participation prompt information indicates an operation required to be performed to complete the target adjustment task upon the trigger operation on the target adjustment control. The first invitation control is configured to invite other one or more accounts to participate in the target adjustment task, wherein the other accounts refer to accounts other than the account currently logged in on the first terminal.

In S202, the first terminal sends adjustment task information indicating the target adjustment task to other accounts in response to the trigger operation on the first invitation control on the task page.

The other accounts refers to accounts other than the account currently logged in on the first terminal. The participation of other accounts can help the user to adjust the quantity of virtual resources required for updating the state of the target resource to the target quantity (i.e., the user is the user who performs a trigger operation on the first invitation control or the user of the first terminal). Thus, the user of the first terminal is motivated to send the first invitation control to the other accounts.

In S203, the first terminal updates the state of the target resource based on the target quantity upon completion of the target adjustment task.

Upon the completion of the target adjustment task, the user can purchase the target resource in the target quantity. Accordingly, upon the completion of the target adjustment task, the first terminal updates the state of the target resource based on the target quantity. That is, upon the completion of the target adjustment task, the first terminal updates the state of the target resource to a state that the target resource is possessed by the account currently logged in in response to a resource transferring operation.

In the technical solutions according to the embodiments of the present disclosure, the target adjustment control is displayed in the live-streaming room, such that the user is allowed to adjust the quantity of virtual resources required to acquire the target resource. After the user performs the trigger operation on the target adjustment control, the task page of the target adjustment task is displayed. Since the target adjustment task is to adjust the quantity of virtual resources required for updating the state of the target resource to the target quantity, the target resource can be acquired in the target quantity upon completion of the target adjustment task. Because the invitation of other users enables the quick completion of the target adjustment task, displaying the participation prompt information and the first invitation control on the task page can stimulate the user to invite other users to complete the target adjustment task. Additionally, the invited users can quickly find an activity of acquiring the target resource in the target quantity of virtual resources based on the adjustment task information sent by the user, without searching randomly, which reduces the time for the users to find the activity of resource quantity adjustment and improves the human-computer interaction efficiency in the process of the users shopping in live-streaming rooms.

FIG. 3 is a schematic flowchart of a method for processing resources according to an exemplary embodiment, and the method for processing resources is briefly described below in combination with FIG. 3. Referring to FIG. 3, the method for processing resources is executed by a second terminal and includes the following processes.

In S301, the second terminal acquires adjustment task information in a live-streaming room, wherein the adjustment task information indicates a target adjustment task for a target resource in the live-streaming room, and the target adjustment task is to adjust a quantity of virtual resources required for updating a state of the target resource to a target quantity.

A third account is logged in on the second terminal, and other terminals invite the third account to participate in the target adjustment task by sending the adjustment task information to the second terminal, wherein the other terminals refer to one or more terminals where other accounts except the third account are logged in. Accordingly, the second terminal receives the adjustment task information sent by other accounts.

In S302, the second terminal displays a participation control based on the adjustment task information.

The participation control indicates participation in the target adjustment task, namely guiding a user corresponding to the third account to participate in the target adjustment task.

In S303, the second terminal displays a task page of the target adjustment task in the live-streaming room in response to a trigger operation on the participation control.

The task page has participation prompt information and a third invitation control displayed thereon. The participation prompt information indicates an operation required to be performed to complete the target adjustment task upon the trigger operation on the participation control. The third invitation control indicate that other accounts are invited to participate in the target adjustment task, wherein the other accounts refer to accounts other than the third account.

In S304, the second terminal sends the adjustment task information to other accounts in response to a trigger operation on the third invitation control.

After participating in the target adjustment task based on the invitation from another user, a user can continue to invite other users to participate in the target adjustment task by triggering the third invitation control on the task page. Accordingly, in response to the trigger operation on the third invitation control, the second terminal sends the adjustment task information to other accounts to enable the other accounts to which the target adjustment task is sent to participate in the target adjustment task. The other accounts refers to accounts other than the account currently logged in on the second terminal.

In S305, the second terminal updates the state of the target resource based on the target quantity upon completion of the target adjustment task.

Upon the completion of the target adjustment task, the user participating in the target adjustment task can purchase the target resource by transferring the target quantity of virtual resources. Accordingly, upon the completion of the target adjustment task, the second terminal updates the state of the target resource based on the target quantity.

In the technical solutions according to the embodiments of the present disclosure, since the target adjustment task is to adjust the quantity of virtual resources required for updating the state of the target resource to the target quantity, the participation control is displayed in response to the adjustment task information being acquired, such that a user can be guided to participate in the target adjustment task indicated by the adjustment task information, and can quickly find an activity of acquiring the target resource in the target quantity of virtual resources. After the user performs the trigger operation on the participation control, the task page of the target adjustment task is displayed. Since the target adjustment task is completed, the target resource can be acquired in the target quantity of virtual resources, such that displaying the participation prompt information and the third invitation control on the task page can effectively encourage the user to invite users to complete the target adjustment task, and the invited users can quickly find an activity of acquiring the target resource in the target quantity of virtual resources based on the adjustment task information sent by the user, without searching randomly, which reduces the time cost for the other users to find the activity of resource quantity adjustment and improves the human-computer interaction efficiency in the process of the users shopping in live-streaming rooms.

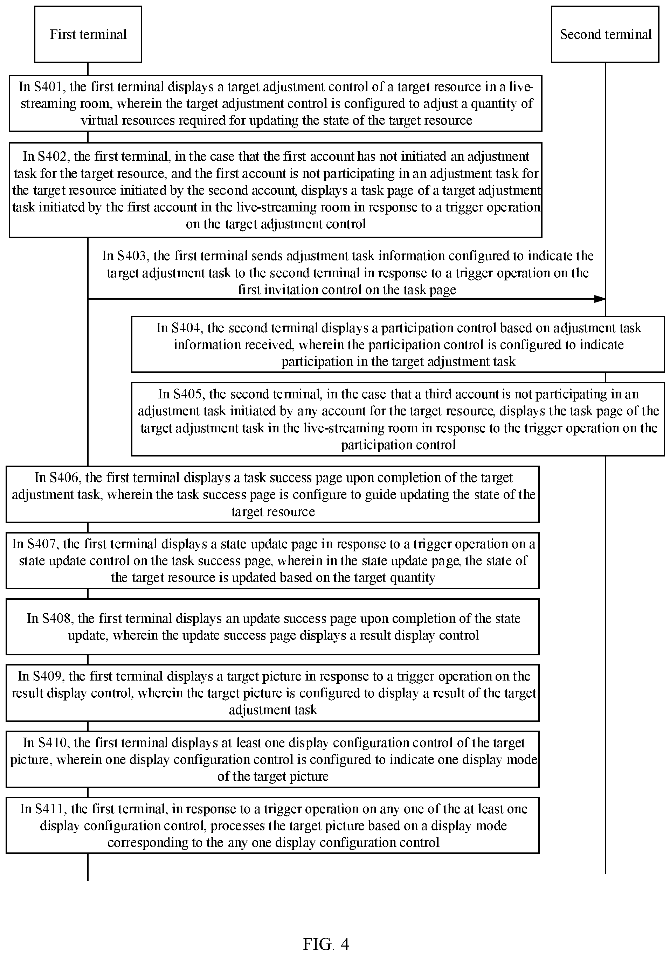

The above-mentioned embodiments are a brief description of the method for processing resources according to the present disclosure, and the method for processing resources is described in detail below. FIG. 4 is a schematic flowchart of a method for processing resources according to an exemplary embodiment. Referring to FIG. 4, the method for processing resources includes the following processes.

In S401, a first terminal displays a target adjustment control of a target resource in a live-streaming room, wherein the target adjustment control is configured to adjust a quantity of virtual resources required for updating the state of the target resource.

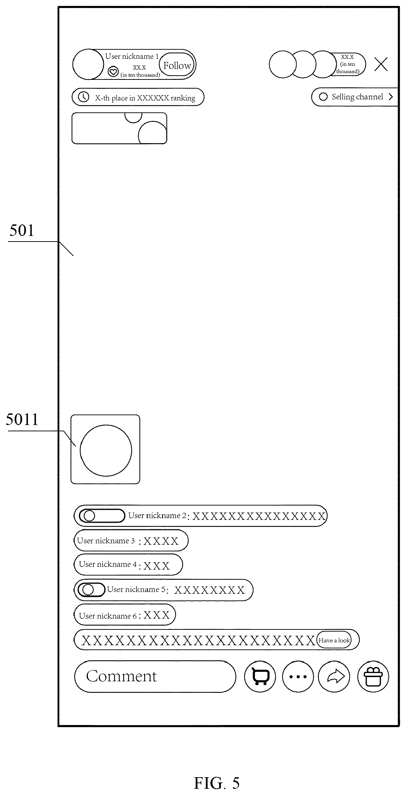

A display position of the target adjustment control in the live-streaming room and the shape, size, and color of the target adjustment control can be flexibly configured, which are not limited to the embodiments of the present disclosure. In some embodiments, the first terminal displays the target adjustment control in the form of a floating ball in the live-streaming room. Referring to FIG. 5, the target adjustment control 5011 is displayed in the form of the floating ball above a video picture of the live-streaming room 501.

In the above technical solutions, the target adjustment control is displayed in the form of the floating ball, which enhances the attraction of the target adjustment control to the user, helps the user with finding the target adjustment control in the live-streaming room, and improves the human-computer interaction efficiency.

In some embodiments, text information is also displayed in the target adjustment control for prompting a user of a purpose of the target adjustment control, such that the difficulty for the user in acquiring the purpose of the target adjustment control is reduced, and the human-computer interaction efficiency is improved. In the embodiment of the present disclosure, an activity of a plurality of users cooperating to adjust the above quantity of virtual resources required and trading in the adjusted target quantity is referred to as a resource quantity adjustment activity for short, wherein the plurality of users constitute a resource quantity adjustment group. In one example, the resource quantity adjustment group is referred to as a "buddy group," and accordingly, the resource quantity adjustment activity is an activity conducted by the "buddy group" to cut down the price, and the text information displayed in the target adjustment control includes "buddy group in a rush to cut down the price" or "n pieces left for buddy group to purchase," wherein n is the current remaining inventory of the target resource and n is a positive integer.

In some embodiments, the first terminal alternately displays first text information and second text information in the target adjustment control according to a period, the first text information indicates the purpose of the target adjustment control, and the second text information includes the current remaining inventory of the target resource. Periods during which the first text information and the second text information are alternately displayed can be flexibly configured, for example, as 5 seconds or 8 seconds, which is not limited to the embodiments of the present disclosure.

In some embodiments, the first terminal dynamically transforms the text information displayed in the target adjustment control based on the current remaining inventory of the target resource. In some embodiments, the process includes: displaying, by the first terminal, the first text information in the target adjustment control; and alternately displaying, by the first terminal, the first text information and the second text information in the target adjustment control according to a period in the case that a ratio of the current remaining inventory of the target resource to an initial inventory quantity of the target resource is a target ratio. The target ratio can be configured flexibly, for example, as including at least one of 90%, 50%, and 10%. In one example, the first text information is "buddy group in a rush to cut down the price", the second text information is "n pieces left for the buddy group to purchase", wherein n is the current remaining inventory of the target resource and n is a positive integer.

It should be noted that the current remaining inventory of the target resource is sent to the first terminal after being counted by the server, wherein the server counts the transaction information fed back by the terminal participating in the resource quantity adjustment activity to acquire the current remaining inventory, and the initial inventory is an inventory of the target resource in response to the resource quantity adjustment activity being started. In some embodiments, the terminal receives the current remaining inventory of the target resource, determines the ratio of the current remaining inventory of the target resource to the initial inventory quantity, compares the ratio with the target ratio, and displays the first text information and the second text information in the target adjustment control alternately according to a period in the case that the ratio is the target ratio. In some embodiments, the server determines the ratio of the current remaining inventory of the target resource to the initial inventory quantity, and in response to the ratio being the target ratio, sends an alternating display instruction to the first terminal for instructing the first terminal to display the first text information and the second text information alternately.

It should be noted that the target resource is a resource to be traded in the live-streaming room for which a corresponding resource quantity adjustment activity has been created. In the case that an anchor account creates the resource quantity adjustment activity for the resource to be traded, the first terminal displays the target adjustment control of the resource in the live-streaming room. In the case that the anchor account does not create the resource quantity adjustment activity, the first terminal does not display the target adjustment control in the live-streaming room.

In some embodiments, the anchor account creates the resource quantity adjustment activity for the target resource prior to starting the live streaming, and accordingly, since the anchor account starts the live streaming, the terminal displaying the live-streaming room displays the target adjustment control of the target resource in the live-streaming room. In some embodiments, the anchor account creates the resource quantity adjustment activity for the target resource during the live streaming, and accordingly, since a successful creation of the resource quantity adjustment activity, the terminal displaying the live-streaming room displays the target adjustment control in the live-streaming room.

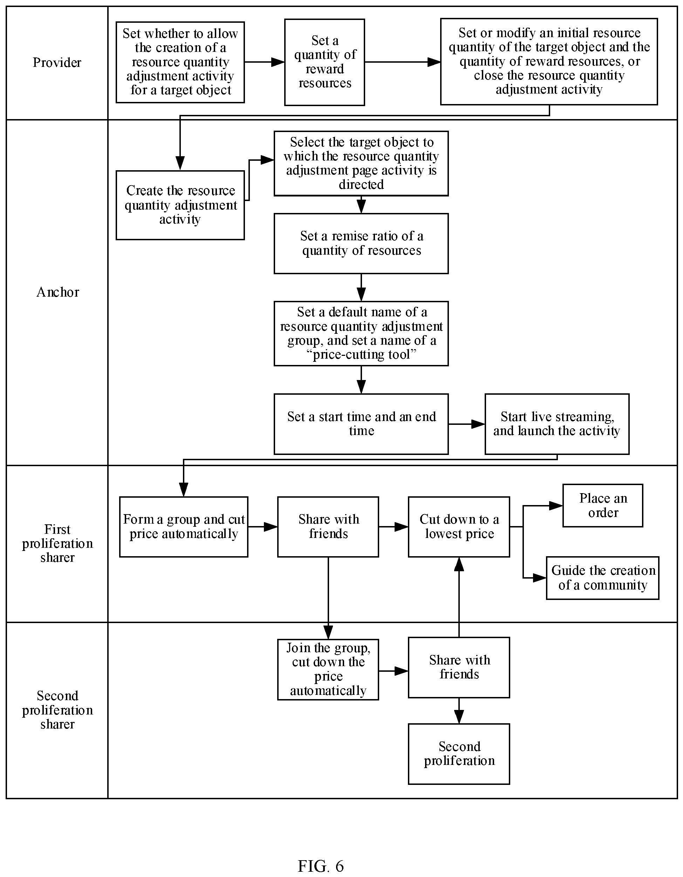

In one example, referring to FIG. 6, the anchor distributes the target resource for a provider, after the provider logs in a provider account on a terminal, whether to allow the resource quantity adjustment activity to be created for the target resource is set through the terminal, and the terminal acquires activity indication information based on an operation of the provider, wherein the activity indication information indicates whether to allow the resource quantity adjustment activity to be created. The provider also sets a quantity of reward resources of the target resource through the terminal, wherein the quantity of reward resources is a quantity of resources attributable to the anchor after successful transactions on the target resource, that is, an anchor commission. The provider also sets or modifies an initial resource quantity of the target resource and the quantity of reward resources through the terminal, wherein the initial resource quantity is the quantity of virtual resources required initially, that is, the quantity of virtual resources required for updating the state of the target resource without participation in the activity, namely, a price of the target resource without participation in the activity. After the resource quantity adjustment activity is allowed to be created for the target resource, the provider can also close the resource quantity adjustment activity through the terminal, that is, stop the resource quantity adjustment activity. The terminal acquires setting information based on a setting operation of the provider, wherein the setting information includes at least one of the activity indication information, the quantity of reward resources, and the initial resource quantity; the acquired setting information is sent to the server; the server receives the setting information and sends the setting information to the terminal where the anchor account is logged in, such that the anchor sets information of the target resource in the live-streaming room based on the setting information, such as sales information.

In the case that the provider sets that the resource quantity adjustment activity is allowed to be created for the target resource, the anchor creates the resource quantity adjustment activity through the terminal where the anchor account is logged in, selects the target resource to which the resource quantity adjustment is directed, and sets a remise ratio of a quantity of resources, as well as a start time and an end time of the resource quantity adjustment activity. The remise ratio of the quantity of resources is a ratio of a quantity of adjustable resources to the quantity of reward resources, wherein the quantity of adjustable resources refers to the largest quantity of resources that can be deducted from the quantity of virtual resources initially required for the target resources, and a difference between the quantity of virtual resources initially required and the quantity of adjustable resources is the target quantity. For example, in the case that the quantity of virtual resources initially required for the target resource is 50, the quantity of reward resources is 10, and the remise ratio of the quantity of resources is 90%, such that the target quantity is 50-10×90%=41. The anchor can also set a default name of the resource quantity adjustment group through the terminal where the anchor account is logged in. In addition, adjusting the quantity of virtual resources required for updating the state of the target resource is also referred to as price-cutting, and to show the price-cutting more vividly, the anchor can also set a name of a "virtual price-cutting tool", such as a dragon slayer and a golden blade, through the terminal. After any terminal adjusts the quantity of virtual resources required for updating the state of the target resource, the terminal also displays text information of "Get a lower price of Y with D", wherein D represents the name of the "virtual price-cutting tool", Y represents the quantity of resources adjusted currently, and the terminal is a terminal logged in any user account.

The terminal where the anchor account is logged in acquires activity information of the resource quantity adjustment activity based on a setting operation of the anchor, wherein the activity information includes at least one of the target resource to which the resource quantity adjustment activity is directed, the remise ratio of the quantity of resources, the start time and the end time of the resource quantity adjustment activity, the default name of the resource quantity adjustment group, and the name of the "virtual price-cutting tool". The terminal where the anchor account is logged in sends the activity information to the server, such that the server provides a background service for the resource quantity adjustment activity based on the activity information. In some embodiments, live streaming is initiated by the anchor upon completion of the setting, and the resource quantity adjustment activity for the target resource is initiated in the live-streaming room of the anchor at the time the live streaming is initiated.

In addition, in response to any user account entering the live-streaming room of the anchor account, the server sends the activity information received to the terminal where the user account is logged in, such that the terminal performs the method for processing resources according to the embodiments of the present disclosure based on the activity information. In some embodiments, the server can also integrate the activity information, and send the integrated information to the terminal to reduce the quantity of computation in the process of displaying the live video data by the terminal and improve the display efficiency. For example, integrating the activity information includes determining the target quantity based on the quantity of virtual resources initially required, the quantity of reward resources, and the remise ratio of the quantity of resources for the target resource.

In S402, the first terminal, in the case that the first account has not initiated an adjustment task for the target resource, and the first account is not participating in an adjustment task for the target resource initiated by a second account, displays a task page of a target adjustment task initiated by the first account in the live-streaming room in response to a trigger operation on the target adjustment control, wherein the first account is an account currently logged in.

In the case that the user has not initiated the target adjustment task or participate in the target adjustment task as invited by other users, the user can create a new resource quantity adjustment group by performing the trigger operation on the target adjustment control and become an initiator of the resource quantity adjustment group, (i.e., a group leader of the resource quantity adjustment group), and the target adjustment task is initiated by the user. Accordingly, in the case that the first account has not initiated the adjustment task for the target resource or is participating in the adjustment task for the target resource initiated by the second account, the first terminal displays the task page of the target adjustment task initiated by the first account in the live streaming in response to the trigger operation on the target adjustment control.

It should be noted that the quantity of virtual resources required for updating the state of the target resource is adjusted along with a resource adjustment operation which refers to adjusting the quantity of virtual resources required for updating the state of the target resource, and the quantity of virtual resources required after the adjustment is less than the quantity of virtual resources required prior to the adjustment. The resource adjustment operation is a resource adjustment operation performed by any account to adjust the quantity of virtual resources required for the first time, that is, in response to a terminal where a certain account is logged in detecting the resource adjustment operation for the target resource for the first time, the quantity of virtual resources required is adjusted; and in response to detecting the resource adjustment operation for an m-th time, the quantity of virtual resources required is not adjusted, wherein m is a positive integer greater than 1.

In some embodiments, the first terminal, in response to the trigger operation on the target adjustment control element, acquires the quantity of resources adjusted currently, and sends the quantity of resources operation to the server. The server receives the quantity of resources, acquires an adjusted quantity of resources by subtracting the quantity of resources from the latest quantity of virtual resources required, updates the latest quantity of virtual resources required to the adjusted quantity of resources, and sends the latest quantity of virtual resources required to the first terminal, such that the first terminal displays the latest quantity of virtual resources required.

In some embodiments, the first terminal sends a resource quantity adjustment request to the server in response to the trigger operation on the target adjustment control. Upon receiving the resource quantity adjustment request, the server acquires the quantity of resources adjusted currently, acquires the adjusted quantity of resources by subtracting the quantity of resources from the latest virtual resource quantity required, updates the latest quantity of virtual resources required to the adjusted quantity of resources, and sends the latest quantity of virtual resources required to the first terminal.

The target adjustment task is initiated by the first account currently logged in on the first terminal, and the user corresponding to the first account triggers the target adjustment task by performing the trigger operation on the target adjustment control, wherein the trigger operation is a trigger operation for the target adjustment control for the first time. The terminal or the server adjusts the quantity of virtual resources initially required for the target resource based on the trigger operation for the target adjustment control for the first time, to acquire the latest quantity of virtual resources required.

In some embodiments, the terminal or the server, prior to acquiring the adjusted quantity of resources by subtracting the quantity of resources adjusted currently from the latest quantity of virtual resources required, determines a difference between the latest quantity of virtual resources required and the target quantity, and randomly takes a value greater than zero and less than the difference as the quantity of resources adjusted currently.

The task page has the participation prompt information and the first invitation control displayed thereon. The participation prompt information indicates an operation required to be performed to complete the target adjustment task upon completion of the trigger operation. The target adjustment task is to adjust the quantity of virtual resources required adjusted currently to the target quantity. The first invitation control is configured to invite other accounts to participate in the target adjustment task.

In some embodiments, the participation prompt information includes a resource quantity adjustment progress, and the resource quantity adjustment progress is displayed based on an adjusted quantity of virtual resources, a quantity of virtual resources adjusted by the current trigger operation, a quantity of virtual resources initially required for the target resource, and the target quantity. In some embodiments, the resource quantity adjustment progress is displayed in a form of a progress bar, and the resource quantity adjustment progress includes two endpoints, wherein a first endpoint is the quantity of virtual resources initially required for the target resource, and a second endpoint is the target quantity, and the resource quantity adjustment progress displays an effect of gradually loading from the first endpoint to the second endpoint along with continuously adjusting the quantity of virtual resources required.

In some embodiments, prior to performing the trigger operation on the target adjustment control, the adjusted quantity of resources is zero and the progress of adjusting the quantity of resources is displayed as a blank progress bar. In response to the trigger operation on the target adjustment control, the first terminal determines a difference between the quantity of virtual resources initially required for the target resource and the target quantity, a ratio of the quantity of resources adjusted currently to the difference, a product of a total length of the progress bar and the ratio as a filled length, and fill color in the progress bar of the filled length starting from the first endpoint to the second endpoint to visualize the progress of the target adjustment task. In some embodiments, the first terminal also displays the quantity of virtual resources required adjusted currently on the endpoint of the progress bar of the filled length, wherein the quantity of virtual resources required adjusted currently is a difference between the quantity of virtual resources required after the last time of adjustment and the quantity of resources adjusted currently, that is, the difference between the quantity of virtual resources initially required for the target resource and a sum of the adjusted quantity of resources and the quantity of resources adjusted currently.

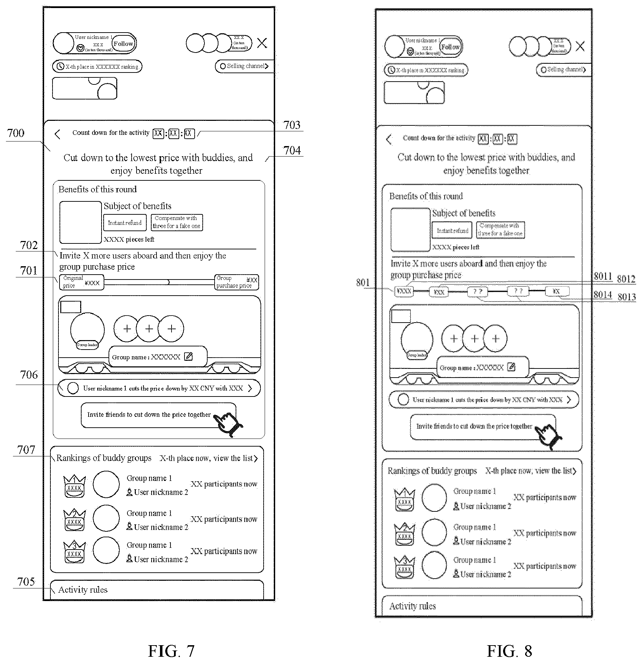

For example, referring to FIG. 7, a task page 700 includes a resource quantity adjustment progress 701, wherein the resource quantity adjustment progress 701 is displayed in a form of a progress bar, a first endpoint of the resource quantity adjustment progress 701 is the quantity of virtual resources initially required for the target resource, that is, an original price ¥XXX, and a second endpoint of the resource quantity adjustment progress 701 is the target quantity, that is, a group purchase price ¥XX. A filled section of the resource quantity adjustment progress 701 is configured to represent the adjusted quantity of resources, and an endpoint of the filled section also has the quantity of virtual resources required adjusted currently displayed thereon, that is, the latest adjusted quantity of virtual resources required.

In the above technical solutions, displaying the resource quantity adjustment progress based on the adjusted quantity of resources, the quantity of resources adjusted by the current trigger operation, the quantity of virtual resources initially required for the target resource, and the target quantity visualizes the progress of the target adjustment task, brings convenience for the user to view, and improves the human-computer interaction efficiency.

In some embodiments, the participation prompt information includes a plurality of subtask labels. The plurality of subtask labels are displayed in a chain structure, the subtask labels indicates subtask nodes included in the target adjustment task, and the target adjustment task can be completed by successively reaching each subtask node included in the target adjustment task. The plurality of subtask labels includes a first subtask label, at least one second subtask label, and at least one third subtask label. The first subtask label is configured to display the target quantity and is the subtask node reached upon the completion of the target adjustment task. Each second subtask label is configured to display a quantity corresponding to a history adjustment operation, wherein the history adjustment operation is an operation of adjusting the quantity of the required virtual resource in history, and the quantity corresponding to the history adjustment operation is the quantity of required virtual resources after adjustment. The third subtask label is configured to display a quantity pending state, and after any account having not participated in the target adjustment task now participates in the target adjustment task, the third subtask label is updated from the quantity pending state to an quantity corresponding to a task participating operation, wherein the task participating operation refers to an operation of the account participating in the target adjustment task, and the quantity corresponding to the task participating operation is an quantity of required virtual resources which is adjusted based on the task participating operation. That is, at a certain time in the future, a certain account participates in the target adjustment task, and the third subtask label changes to the second subtask label based on an operation of the account participating in the target adjustment task.

In some embodiments, the plurality of subtask labels further include a fourth subtask label for displaying the quantity of virtual resources initially required for the target resource. Comparing the fourth subtask label with the first subtask label, which highlights the difference before and after the adjustment of the quantity of resources and encourages the user to complete the target adjustment task, making it more convenient for more users to find and participate in the transaction of the target resource, and improving the human-computer interaction efficiency.

For example, referring to FIG. 8, a plurality of subtask labels are displayed in a chain structure to form a resource quantity adjustment chain 801, wherein a fourth subtask label 8011, at least one second subtask label 8012, at least one third subtask label 8013, and a first subtask label 8014 are sequentially arranged from left to right, and as the third subtask label changes to the second subtask label, a connection chain on the left side of the third subtask label is also updated to a target color for indicating that the target adjustment task progresses from the last subtask node to the subtask node represented by the third subtask label. The target color is any color different from the initial color of the connection chain.

In some embodiments, the participation prompt information includes a number of accounts of potential participants, wherein the number of accounts of potential participants is determined based on a target number of accounts and a number of accounts having participated in the target adjustment task, and the target number of accounts is a number of accounts required to participate in triggering completion of the target adjustment task. The number of accounts of potential participants is a difference between the target number of accounts and the number of accounts having participated in the target adjustment task. For example, in addition to the first account initiating the target adjustment task, three more accounts are required to participate to complete the target adjustment task. After the first account initiates the target adjustment task, the number of accounts having participated in the target adjustment task is 0, and the target number of accounts is 3, then the number of accounts of potential participants is 3-0=3. In some embodiments, to facilitate the user to understand the meaning of the number of accounts of potential participants and identify the operations needing to be performed to complete the target adjustment task, the number of accounts of potential participants cooperates into the text information for display, and the text information in cooperation with the number of accounts of potential participants is configured to indicate that the users in the number of accounts of potential participants are needed to participate in the resource quantity adjustment activity, whereby the target adjustment task can be completed. For example, with continued reference to FIG. 7, the task page displays text information 702 of "Invite X more people on board to enjoy the group purchase price", wherein X refers to the number of accounts of potential participants, and in the case that the number of accounts of potential participants is 3, the text information 702 is "Invite 3 more users aboard and then enjoy the group purchase price."

It should be noted that the resource quantity adjustment progress or the plurality of subtask labels can be flexibly configured to be displayed at any position on the task page, which is not limited to the embodiments of the present disclosure. In some embodiments, to more vividly represent the operations needing to be performed to complete the target adjustment task, the resource quantity adjustment progress or the plurality of subtask labels are displayed adjacent to the number of accounts of potential participants. For example, the resource quantity adjustment progress or the plurality of subtask labels are displayed below the number of accounts of potential participants; alternatively, the resource quantity adjustment progress or the plurality of subtask labels are displayed above the number of accounts of potential participants, which is not limited to the embodiments of the present disclosure.

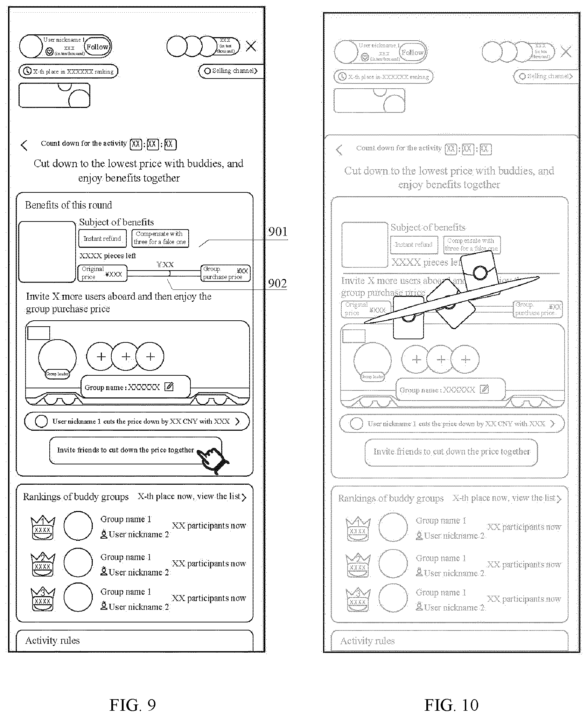

In some embodiments, referring to FIG. 9, the task page 900 also has a resource entry 901 of the target resource displayed thereon. Since the resource quantity adjustment progress represents the quantity of virtual resources required to acquire the target resource, the resource quantity adjustment progress 902 is displayed in the resource entry 901 for representing the resource quantity adjustment progress of the target resource. In some embodiments, the resource entry of the target resource includes at least one of a resource image, a resource title, a service label, and the current remaining inventory. In some embodiments, the trigger operation on the resource image or resource title can trigger a terminal to display a detail page of the target resource. In some embodiments, the trigger operation performed in a display region of the resource entry can trigger the terminal to display the detail page of the target resource.

The resource image is an image for presenting the target resource. In some embodiments, the terminal where the anchor account logged in uploads a plurality of resource images, the resource image in the resource entry is any one of the plurality of resource images. In some embodiments, the resource image in the resource entry is a first primary image of the target resource uploaded by the terminal.

The resource title is text information configured to indicate an attribute of the target resource, and the resource title is also a subject of benefits shown in the drawings. In some embodiments, the resource title is uploaded by the terminal where the anchor account is logged in. In some embodiments, the resource title is displayed as a line of text, and in the case that a number of words in the resource title exceeds a maximum number of words that can be displayed in a line, the excessive text is replaced with an ellipsis.

The service label is configured to indicate after-sale protection provided for the target resource to acquire the user's trust and attract the user to participate in the transaction of the target resource, for example, the service label includes at least one of a service label having "instant delivery" displayed thereon, a service label having "instant refund" displaying thereon, and a service label having "compensate with three for a fake one" displaying thereon, and a service label indicating a shop qualification of a shop to which the target resource belongs.

In some embodiments, the first terminal, in response to the trigger operation on the target adjustment control, also plays a first animation indicating the quantity of resources adjusted currently. In some embodiments, the first terminal plays the first animation in the live-streaming room prior to displaying the task page. In some embodiments, the first terminal plays the first animation in the live-streaming room after displaying the task page. In some embodiments, the first terminal plays the first animation while displaying the task page. A time sequence of displaying the task page and the first animation is not limited to the embodiments of the present disclosure.

In some embodiments, a process of the first terminal playing the first animation while displaying the task page in response to the trigger operation on the target adjustment control includes: displaying, by the first terminal, a task page in response to the trigger operation on the target adjustment control, and playing, by the first terminal, the first animation above the task page, wherein the task page has the resource quantity adjustment progress displayed thereon, and the resource quantity adjustment progress represents a proportion of the adjusted quantity of resources in a quantity of resources to be adjusted, the quantity of resources to be adjusted is a difference between the quantity of virtual resources initially required for the target resource and the target quantity; and the content of the first animation displayed includes: opening a plurality of red envelopes, then appearing a plurality of gold coins and text information indicating the quantity of resources adjusted currently, and receiving the plurality of gold coins into the resource quantity adjustment progress. In response to displaying that the plurality of gold coins are received into the resource quantity adjustment progress, the resource quantity adjustment progress is determined based on the quantity of resources adjusted currently, and is loaded based on the quantity of resources adjusted currently until a loaded proportion reaches a reference proportion, wherein the loaded proportion is a proportion of a loaded length in a total length of the resource quantity adjustment progress, and the reference proportion is a proportion of the quantity of resources adjusted currently in the quantity of resources needing to be adjusted.

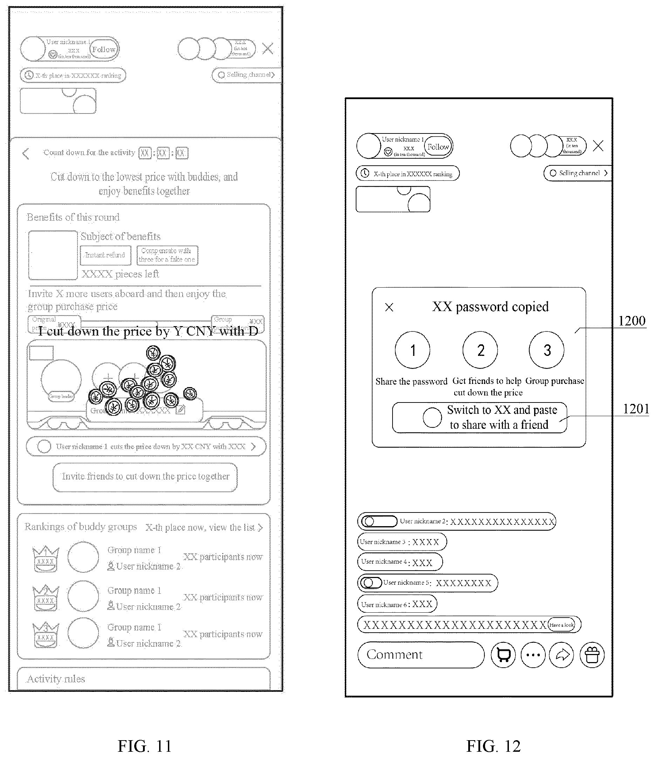

In one example, one frame for displaying the opening of a plurality of red envelopes in the first animation is shown in FIG. 10, and one frame for displaying the appearing of a plurality of gold coins in the first animation is shown in FIG. 11. In FIG. 11, the text information configured to indicate the quantity of resources adjusted currently is displayed as "I cut down the price by Y CNY with D," where D represents the name of a "virtual price-cutting tool" and Y represents the quantity of resources adjusted currently. By playing the first animation, a process of price-cutting is vividly displayed, users can be attracted and have more fun.

In some embodiments, with continued reference to FIG. 7, the task page 700 also has a countdown 703 of the target adjustment task displayed thereon, which is a time gap between the current time and the end time of the target adjustment task. The end time of the target adjustment task is the end time of the resource quantity adjustment activity, and the end time of the target adjustment task is sent to the first terminal by the server after the terminal where the anchor account is logged in sends the same to the server. In some embodiments, the task page also has an activity title indicating a subject matter of the resource quantity adjustment activity displayed thereon. With continued reference to FIG. 7, an activity title 704 displayed on the task page 700 is "Cut down to the lowest price with buddies, and enjoy benefits together."

In some embodiments, with continued reference to FIG. 7, the task page 700 also has group information 704 of the resource quantity adjustment group displayed thereon. In some embodiments, the group information 704 includes an avatar of the group leader of the resource quantity adjustment group and avatars of group members of the resource quantity adjustment group. The target adjustment task is initiated by the group leader, the members refer to users who participate in the target adjustment task through invitations. In the case that no user is participating in the target adjustment task, the avatars of the group members are displayed as blank by default. In the case that any user participates in the target adjustment task, an avatar of a group member originally in blank state changes from the blank state to a state displaying the avatar of the user. The group information 704 also includes the name of the resource quantity adjustment group. In some embodiments, the name of the resource quantity adjustment group is a default name set for the anchor account. In some embodiments, the leader can change the name of the resource quantity adjustment group, and the task page displayed on the terminal corresponding to the leader includes a name change control. In the case that the first account logged in on the first terminal is an initiator account of the target adjustment task, the task page displayed on the first terminal includes the name change control. The first terminal displays a name input control in response to a trigger operation on the name change control, acquires name information input in the name input control, detects whether there is a sensitive word in the name information, updates the name information to the name of the resource quantity adjustment group initiated by the first account in the case that the name information does not include a sensitive word, and pops out modification prompt information in the case that the name information includes a sensitive word, wherein the modification prompt information indicates that the name information input currently includes a sensitive word and the name information is prompted to modify.

In some embodiments, with continued reference to FIG. 7, the task page 700 also has activity rules 705 displayed thereon. For example, the activity rules 705 are that "1. each user can participate in at most three buddy group activities initiated by others per day, and self-initiated buddy group activities are unlimited in number; 2. once a group is formed, all the users of the group can purchase the activity commodities at group purchase price, and each user can purchase one commodity; 3. the inventory quantity of commodities participating in the activities for the buddy group activity is limited, first come, first served, and the activity ends up with nothing left." The activity rules can be flexibly configured, and a manager of the live-streaming platform adjusts the activity rules by configuring the quantity of resources through a management terminal. The management terminal acquires the activity rules and sends the activity rules to the server. The server receives the activity rules and sends the activity rules to the terminal, and the terminal displays the activity rules newly sent by the server on the task page.

In S403, the first terminal sends adjustment task information indicating the target adjustment task to the second terminal in response to a trigger operation on the first invitation control on the task page.

The account logged in on the second terminal refers to any account other than the account currently logged in on the first terminal. The target adjustment task is a resource quantity adjustment task for one resource quantity adjustment group, and the target of the resource quantity adjustment group is to acquire the quantity of virtual resources required for the resource in the live-streaming room. The adjustment task information of the adjustment task initiated in different live-streaming rooms is different. The adjustment task information of the adjustment task initiated for different resources in one live-streaming room is different. The adjustment task information of the adjustment task initiated for one resource by different accounts in one live-streaming room is different.

In some embodiments, the first terminal runs a first application, enters a live-streaming room through the first application, and displays the task page based on an operation performed by the user. In some embodiments, the first terminal sends the adjustment task information to the account logged in on the second terminal through a second application. The second application is any application other than the application aforementioned. For example, the second application is a social application, and the account logged in on the second terminal refers to an account logged in in the second application. Accordingly, sending, by the first terminal, the adjustment task information to the account logged in on the second terminal in response to the trigger operation on the first invitation control includes: generating, by the first terminal, the adjustment task information in response to the trigger operation on the first invitation control and storing, by the first terminal, the adjustment task information in a clipboard, wherein the adjustment task information is a participation password; displaying, by the first terminal, an information-sharing pop-up window, wherein the information-sharing pop-up window has a share control displayed thereon; displaying, by the first terminal, a friend selection page of the second application corresponding to the share control in response to a trigger operation on the share control; displaying, by the first terminal, a dialogue page corresponding to a friend option in response to a select operation on the friend option on the friend selection page; pasting, by the first terminal, the adjustment task information in the clipboard into a dialogue input control on the dialogue page in response to a past operation; sending, by the first terminal, the adjustment task information to an account corresponding to the friend option in response to a trigger operation on a dialogue sending control on the dialogue page, wherein the account corresponding to the friend option is the account logged in on the second terminal. The first terminal sends the adjustment task information to a background server of the second application in response to a trigger operation on the dialogue sending control, such that the background server can send the adjustment task information received to the second terminal to achieve that the adjustment task information is sent to the account logged in on the second terminal, wherein the account logged in on the second terminal refers to an account logged in in the second application on the second terminal.

In some embodiments, referring to FIG. 12, the first terminal displays an information-sharing pop-up window 1200 having a share control 1201 displayed thereon in response to the trigger operation on the first invitation control. The information-sharing pop-up window 1200 also has a process of participating in the resource quantity adjustment activity displayed threon, wherein the process includes sharing a password, cutting down the price with the help of friends, and rushing to purchase in a group. The sharing the password is sending adjustment task information to the other accounts; the cutting down the price with the help of friends is inviting friends to participate in a target adjustment task through the password; and the rushing to purchase in a group is purchasing a target resource in the target quantity upon a plurality of users complete the target adjustment task in cooperation.

In some embodiments, in the case that the first terminal fails to run the second application in response to the trigger operation on the share control, that is, in the case that a friend selection page of the second application is failed to display, sharing prompt information is popped out, wherein the sharing prompt information indicates that the failure of running the second application and the second application needs to be opened manually for sharing.

In some embodiments, the first terminal sends the adjustment task information to the account logged in on the second terminal through the first application. Sending, by the first terminal, the adjustment task information to the account logged in on the second terminal in response to the trigger operation on the first invitation control includes: generating, by the first terminal, the adjustment task information in response to the trigger operation on the first invitation control, wherein the adjustment task information is a link for the target adjustment task; displaying the friend selection page of the first application in the first application; and sending the adjustment task information to an account corresponding to a friend option in response to the selection operation on the friend option on the friend selection page, wherein the account is the account logged in on the second terminal. The first terminal sends the adjustment task information to a server corresponding to the first application, such that the server sends the adjustment task information received to the second terminal, to send the adjustment task information to the account logged in on the second terminal, wherein the account logged in on the second terminal refers to an account logged in in the first application on the second terminal.

In the above-mentioned embodiments, the first terminal sends the adjustment task information to the account logged in on the second terminal in response to the trigger operation on the first invitation control. In some embodiments, avatars of group members of the resource quantity adjustment group are displayed on the task page, and the first terminal sends the adjustment task information to the account logged in on the second terminal in response to a trigger operation on a target avatar, wherein the target avatar is an avatar of a group member displayed in a blank state.

In S404, the second terminal displays a participation control based on adjustment task information received, wherein the participation control indicates participation in the target adjustment task.

In some embodiments, the first terminal sends the adjustment task information to the background server of the second application, such that the backend server sends the adjustment task information to the second terminal. The second terminal displays the adjustment task information on the dialogue page with the first account in the second application; stores the adjustment task information in the clipboard in response to a copy operation on the adjustment task information; and displays the participation control based on the adjustment task information in the clipboard in response to a trigger operation on the first application.

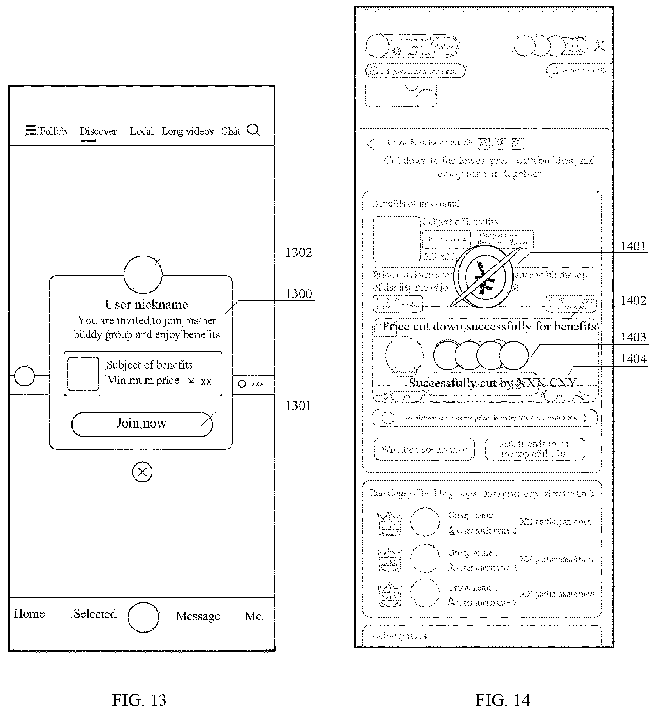

In some embodiments, referring to FIG. 13, the second terminal, in response to the trigger operation on the first application, has a home page of the application displayed thereon and has a participation prompt box 1300 displayed on the home page. The participation prompt box 1300 has a participation control 1301 displayed thereon, and the participation control 1301 has text information of "Join now" displayed thereon to guide a user to participate in the target adjustment task. The participation prompt box 1300 also has an invitation avatar 1302 displayed thereon, wherein the invitation avatar 1302 is an avatar of the group leader of the resource quantity adjustment group or an avatar of an account that sends the adjustment task information. The participation prompt box 1300 also includes a user nickname, wherein the user nickname and the invitation avatar 1302 belong to one account. The participation prompt box 1300 also has the resource entry of the target resource displayed thereon, wherein the resource entry includes the resource image, the resource title, and the target quantity, to attract the user to participate in the target adjustment task by triggering the participation control, wherein the resource title is a subject of benefits shown in FIG. 13, and the target quantity is the lowest price shown in FIG. 13.

In some embodiments, the adjustment task information is sent to the server corresponding to the first application by the first terminal, such that the server can send the adjustment task information to the second terminal. The second terminal displays the adjustment task information in the dialogue page with the first account in the first application, wherein the adjustment task information is a link for the target adjustment task; and displays the participation control in response to the trigger operation on the adjustment task information.

In S405, the second terminal, in the case that a third account is not participating in an adjustment task initiated by any account for the target resource, displays the task page of the target adjustment task in the live-streaming room in response to the trigger operation on the participation control, wherein the third account is an account currently logged in on the second terminal.

The third account is an account logged in in the first application on the second terminal. In the embodiments of the present disclosure, prior to detecting the trigger operation on the participation control, the second terminal does not detect a trigger operation on the target adjustment control, that is, the third account is not participating in an adjustment task initiated by any account, the second terminal displays the task page of the target adjustment task in the live-streaming room in response to the trigger operation on the participation control.

In the case that the third account is not participating in the adjustment task for the target resource initiated by any account and the third account has not initiated the adjustment task for the target resource, the second terminal displays the task page of the target adjustment task in the live-streaming room in response to the trigger operation on the participation control. Any account refers to an account other than the third account.

It should be noted that the quantity of virtual resources required for updating the state of the target resource is adjusted along with a task participating operation, wherein the task participation operation is an operation of any account participating in the target adjustment task, and the operation of any account participating in the target adjustment task is the trigger operation on the participation control. The task participating operation is a task participating operation of any account for the first time, that is, in response to a terminal where a certain account is logged in detecting the task participating operation for the target resource for the first time, the quantity of virtual resources required is adjusted; and in response to detecting the task participating operation for an m-th time, the quantity of virtual resources required is not adjusted, where m is a positive integer greater than 1.

In some embodiments, the second terminal, in response to the trigger operation on the participation control, acquires the quantity of resources adjusted currently, and sends the quantity of resources adjusted currently to the server. The server receives the quantity of resources adjusted; subtracts the quantity of resources from the latest quantity of virtual resources required, to acquire the adjusted quantity of resources; updates the latest quantity of virtual resources required to the adjusted quantity of resources; sends the latest quantity of virtual resources required to the second terminal; and sends the latest quantity of virtual resources required to the other terminals participating in the target adjustment task and the first terminal initiating the target adjustment task, such that the second terminal, the other terminals, and the first terminal display the latest quantity of virtual resources required.

The resource adjustment operation on the second terminal for the latest quantity of virtual resources required is adjusted based on a history adjustment operation, wherein the history adjustment operation is an operation of adjusting the quantity of virtual resources required performed by other terminals. For example, the target adjustment task is initiated by the first account logged in on the first terminal. In response to detecting the trigger operation on the target adjustment control, the first terminal adjusts the quantity of virtual resources initially required for the target resource to acquire the latest quantity of virtual resources required. In response to detecting the trigger operation on the first invitation control, the first terminal sends the adjustment task information to the second terminal. The second terminal displays the participation control based on the adjustment task information. In response to detecting the trigger operation on the participation control, the second terminal adjusts the latest quantity of virtual resources required at the current time, and updates the adjusted quantity of resources to the latest quantity of virtual resources required. After adjusting the latest quantity of virtual resources required, the second terminal sends the adjustment task information to the third terminal in response to the trigger operation on the third invitation control. The third terminal displays the participation control based on the adjustment task information, and in the case that the trigger operation on the participation control is detected, the latest quantity of virtual resources required at the current time is adjusted, and the adjusted quantity of resources is adjusted to the latest quantity of virtual resources required, and so on.

The process of the second terminal displaying the task page of the target adjustment task is similar to the process of the first terminal displaying the task page of the target adjustment task, which is not described in detail here. For example, the task page displayed by the second terminal includes participation prompt information and a third invitation control. The participation prompt information indicates an operation needing to be performed after the trigger operation on the participation control to complete the target adjustment task. The target adjustment task is to adjust the quantity of virtual resources required adjusted currently to the target quantity. The third invitation control is configured to invite other accounts to participate in the target adjustment task.

In some embodiments, prior to the trigger operation being performed on the participant control, the resource quantity adjustment progress is displayed as a partially filled progress bar, a proportion of a filled length to a total length of the progress bar is a proportion of the adjusted quantity of resources to a total quantity of resources needing to be adjusted, and the total quantity of resources needing to be adjusted is a difference between the quantity of virtual resources initially required for the target resource and the target quantity. The second terminal, in response to the trigger operation on the participation control, acquires a ratio of the quantity of resources adjusted currently to a first difference, wherein the first difference is a difference between the quantity of virtual resources initially required for the target resource and the target quantity. The product of the ratio and the total length of the progress bar is determined as the filled length. A color is filled in the progress bar with a filled length starting from a first endpoint of the progress bar to a second endpoint, thereby visualizing the progress of the target adjustment task, wherein the first endpoint is an endpoint of the filled part in the progress bar, and the second endpoint is an endpoint of the progress bar.

It should be noted that, except the second terminal, other terminals participating in the target adjustment task also update the resource quantity adjustment progress on the task page, to provide each user in the resource quantity adjustment group with synchronized progress of the target adjustment task. The progress of updating the resource quantity adjustment progress by other terminals is similar as the progress of updating the resource quantity adjustment progress by the second terminal.

In some embodiments, the second terminal, in response to the trigger operation on the participation control, also plays a third animation, wherein the third animation indicates the quantity of resources adjusted currently. The process of the second terminal playing the third animation is similar to the process of the first terminal playing the first animation, which is not be described in detail here.

It should be noted that the second terminal, after displaying the task page of the target adjustment task, sends the adjustment task information indicating the target adjustment task to other accounts in response to a trigger operation on the third invitation control on the task page, wherein the other accounts refers to accounts other than the account logged in on the second terminal. The process of the second terminal sending the adjustment task information to other accounts is similar to the process of the first terminal sending the adjustment task information to the second terminal, which is not described in detail here. Accordingly, a processing procedure after the terminal where any one of other accounts logged in receives the adjustment task information is similar to a processing procedure after the second terminal receives the adjustment task information, which is not described in detail here.

In the above-mentioned S401 to S405, the target adjustment task is not completed, wherein completion of the target adjustment task means that the quantity of virtual resources required for updating the state of the target resource is adjusted to the target quantity. Alternatively, the completion of the target adjustment task means that the number of accounts of potential participants is 0. In some embodiments, in the case that adjusting the quantity of virtual resources required for updating the state of the target resource to the target quantity and the number of accounts of potential participants being 0 achieve at the same time, a sum of the quantity of resources adjusted by the account initiating the target adjustment task and the quantity of resources adjusted by the account participating in the target adjustment task is the quantity of resources needing to be adjusted, that is, the difference between the quantity of virtual resources initially required for the target resource and the target quantity.

In S406, the first terminal displays a task success page upon completion of the target adjustment task, wherein the task success page is configured to guide updating the state of the target resource.

Through processes S401 and S405 and similar processes as S403 to S405, the target adjustment task is gradually completed. It should be noted that the server determines whether the target adjustment task is completed by processing resource adjustment information uploaded by a plurality of terminals, wherein the plurality of terminals are a plurality of terminals performed the above processes. In response to the completion of the target adjustment task, the sever sends task completion information to the plurality of terminals, such that the plurality of terminals can display the task success page based on the task completion information. In S406, taking the first terminal displaying the task success page as an example for description, the process of displaying the task success page by other terminals other than the first terminal is similar to the process of displaying the task success page by the first terminal, which is not described in detail here.

In some embodiments, the first terminal, in response to receiving the task completion information, is displaying the task page of the target adjustment task, and updates the task page to the task success page based on the task completion information.

In some embodiments, the first terminal displays completion prompt information on the target adjustment control in the live-streaming room based on the task completion information, wherein the completion prompt information indicates that the target adjustment task has been completed, such that the user can timely find that the target adjustment task has been completed when viewing the live streaming, and the user does not need to repeatedly check the task page to determine whether the target adjustment task has been completed, thereby improving the human-computer interaction efficiency.

In some embodiments, after participating in the target adjustment task, the user exits the live-streaming room, and the user re-enters the live-streaming room within a period upon completion of the target adjustment task, the user enters the task success page by operating on the target adjustment control. Alternatively, after participating in the target adjustment task, the user views the live streaming in the live-streaming room, and in a period upon completion of the target adjustment task, the user views the task success page by operating on the target adjustment control. Accordingly, in the case that the target adjustment task has been completed, the first terminal displays the task success page in response to the trigger operation on the target adjustment control.

In some embodiments, the first terminal, upon completion of the target adjustment task, also plays a second animation, wherein the second animation indicates that the target adjustment task has been completed. In some embodiments, the first terminal plays the second animation in response to updating the task page to the task success page. In some embodiments, the first terminal, upon completion of the target adjustment task, plays the second animation in response to the trigger operation on the target adjustment control.

In one example, one frame in the second animation is shown in FIG. 14, wherein the second animation includes a price cutting-down pattern 1401, text information indicating completion of the target adjustment task 1402, an avatar of the account participating in the target adjustment task 1403, and text information indicating the total quantity of resources adjusted 1404. The text information 1402 is "Successfully cut down the price for benefits", and the text information 1404 is "Successfully cut down by XXX CNY", wherein XXX represents the total quantity adjusted, that is, the difference between the quantity of virtual resources initially required for the target resource and the target quantity.

In S407, the first terminal displays a state update page in response to a trigger operation on a state update control on the task success page, wherein in the state update page, the state of the target resource is updated based on the target quantity.

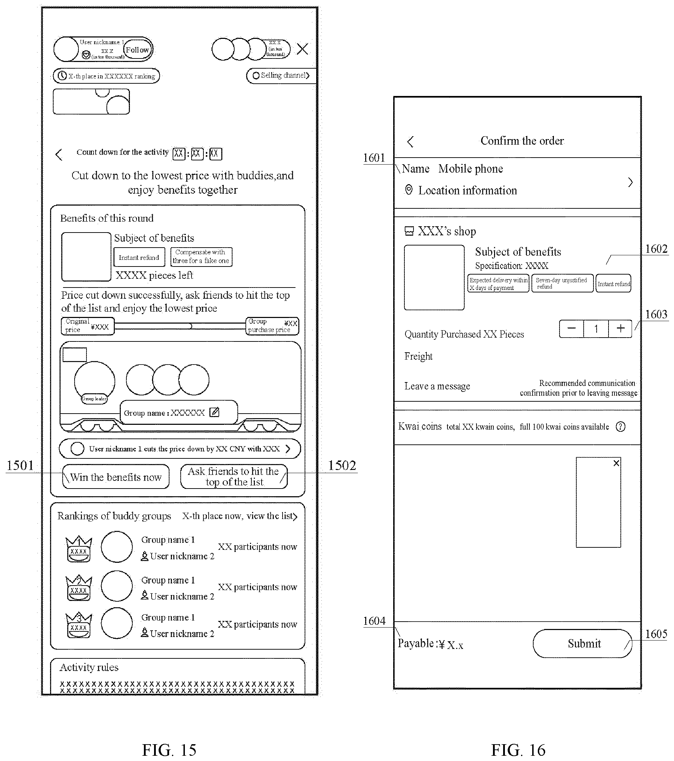

In one example, the task success page is shown in FIG. 15, wherein the task success page has a state update control 1501 displayed thereon, and the state update control 1501 has text information of "Win the benefits now" displayed thereon and is configured to vividly indicate the purpose of the state update control to guide the user to purchase the target resource.

In one example, the state update page is shown in FIG. 16. The state update page has receipt information corresponding to the account logged in on the first terminal 1601 displayed thereon, a resource entry of the target resource 1602, a transaction quantity of the target resource 1603, and a target quantity 1604, which is convenient for users to confirm order information. The state update page also has an order submission control 1605 displayed thereon, and the first terminal updates the state of the target resource based on the target quantity in response to an operation on the order submission control. The transaction quantity of the target resource refers to the maximum number in which the target resource can be purchased. In some embodiments, the transaction quantity of the target resource is set to be 1, any adjustment is not allowed, and the first terminal displays prompt information in response to an operation of adjusting the transaction quantity, to prompt that only one item can be purchased. In some embodiments, the state update page is closed due to an unexpected reason in the case that the state is not updated successfully, the first terminal supports updating the state of the target resource again, that is, the first terminal displays the state update page in response to the trigger operation on the state update control in the case that the state is not updated successfully, wherein in the state update page, the state of the target resource is updated based on the target quantity. The first terminal updates the state of the target resource based on the target quantity, that is, the first terminal updates the state of the target resource to a state that the target resource is possessed by an account currently logged in in response to a resource transferring operation, wherein the resource transferring operation is an operation of transferring virtual resources in the target quantity to a designated account.

In the technical solutions according to the embodiments of the present disclosure, the target adjustment control is displayed in the live-streaming room, such that the user is allowed to adjust the quantity of virtual resources required to acquire the target resource. After the user performs the trigger operation on the target adjustment control, the task page of the target adjustment task is displayed. Since the target adjustment task is to adjust the quantity of virtual resources required for updating the state of the target resource to the target quantity, the target resource can be acquired in the target quantity upon completion of the target adjustment task, such that displaying the participation prompt information and the first invitation control on the task page can effectively encourage the user to invite other users to complete the target adjustment task, and the invited users can quickly find an activity of acquiring the target resource in the target quantity of virtual resources based on the adjustment task information sent by the user, without searching randomly, which reduces the time cost for the users to find the activity of resource quantity adjustment and improves the human-computer interaction efficiency in the process of the users shopping in live-streaming rooms.

It should be noted that the first terminal updates the state of the target resource based on the target quantity prior to the end of the target adjustment task. The first terminal no longer supports updating the state of the target resource based on the target quantity after the end of the target adjustment task.

In S408, the first terminal displays an update success page upon completion of the state update, wherein the update success page has a result display control displayed thereon.

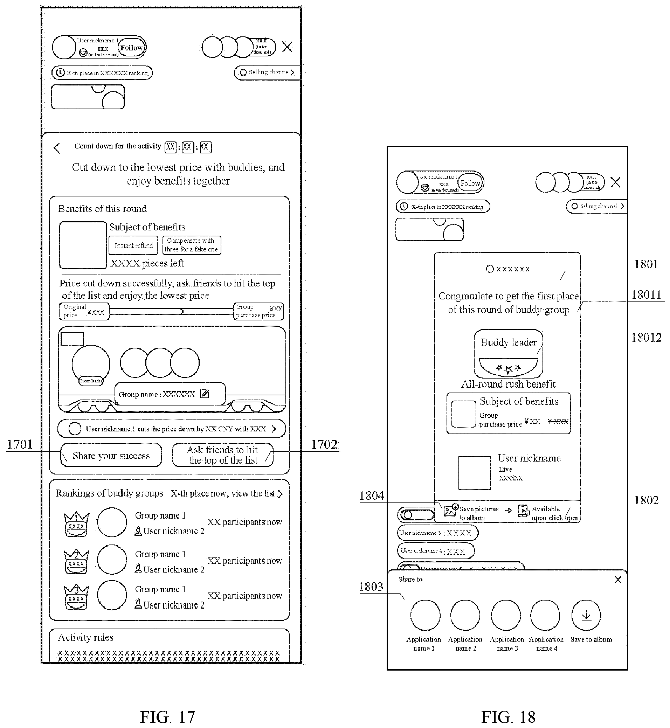

The first terminal displays the update success page upon completion of the state update, that is, upon transaction of the target resource being successful. In some embodiments, an update success page is shown in FIG. 17. The update success page has a result display control 1701 displayed thereon, wherein the result display control has text information of "Share your success" displayed thereon, which indicates that the result display control is configured to trigger to share a result of participating in the target adjustment task.

In S409, the first terminal displays a target picture in response to a trigger operation on the result display control, wherein the target picture is configured to display a result of the target adjustment task.

In one example, the first terminal, in response to the trigger operation on the result display control, displays a target picture 1801 in a live-streaming room as shown in FIG. 18. The target picture 1801 includes ranking information 18011 and a result display pattern 18012, wherein the ranking information 18011 indicates the resource quantity adjustment group to which the first account belongs among a plurality of resource quantity adjustment groups. The plurality of resource quantity adjustment groups are resource quantity adjustment groups corresponding to a plurality of target adjustment tasks, wherein the plurality of target adjustment tasks are adjustment tasks for the target resource initiated by a plurality of different accounts. The target picture 1801 also includes the resource entry of the target resource, wherein the resource entry includes the resource image, the resource title, the target quantity, and the quantity of virtual resources initially required for the target resource. The resource title is a subject of benefits shown in the target picture 1801. The target quantity is a group purchase price shown in the target picture 1801. The quantity of virtual resources initially required is a price of the resources that is struck through in the target picture 1801. The target picture 1801 also includes account information of an anchor account of the live-streaming room, wherein the account information includes a two-dimensional code of the anchor account, a user nickname of the anchor account, and a live-streaming state of the anchor account, and the like.

In S410, the first terminal displays at least one display configuration control of the target picture, wherein each display configuration control indicates one display mode of the target picture.

In some embodiments, the at least one display configuration control includes a home page display control, wherein the home page display control indicates displaying the target picture on the home page displayed upon startup of the application. In one example, with continued reference to FIG. 18, the first terminal displays a home display control 1802 below the target picture.

In some embodiments, at least one display configuration control includes a share control, wherein the share control indicates sharing the target picture to accounts of other applications, such that the target picture can be displayed to users corresponding to the accounts of other applications. In some embodiments, with continued reference to FIG. 18, the first terminal pops out a display configuration window 1803 from the bottom of the live-streaming room, in which a plurality of share controls are displayed, each for sharing the target picture through an application.

In some embodiments, the at least one display configuration control includes a save control, wherein the save control indicates saving the target picture locally. In one example, with continued reference to FIG. 18, the first terminal displays a save control 1804 below the target picture, or the first terminal displays the save control in the display configuration window.

In S411, the first terminal, in response to a trigger operation on any one of the at least one display configuration control, processes the target picture based on a display mode corresponding to the triggered display configuration control.

In some embodiments, the triggered display configuration control is the home page display control, and the first terminal displays the target picture on the home page of the application in response to a trigger operation on the home page display control. In some embodiments, the first terminal saves home page display information in response to the trigger operation on the home page display control, wherein the home page display information indicates displaying the target picture on the home page. The first terminal, in response to each time of startup of the application, displays the target picture on the home page of the application based on the home page display information. In some embodiments, the first terminal jumps to the home page of the application and displays the target picture on the home page of the application in response to the trigger operation on the home page presentation control element.

In some embodiments, the triggered display configuration control is the share control, and the first terminal sends the target picture to the account of the other application in response to the trigger operation on the share control. The first terminal, in response to the trigger operation on the share control, displays a friend selection page of the application corresponding to the share control; in response to a select operation on any one of friend options in the friend selection page, displays a dialogue window corresponding to the friend option; sends the target picture to the account corresponding to the friend option; and displays a result of the target picture sent in the dialogue window.

It should be noted that in the above embodiments, the first account logged in on the first terminal is an account for initiating the target adjustment task. Prior to the first terminal responding to the trigger operation on the target adjustment control, the first account has not initiated any adjustment task for the target resource and does not participate in any adjustment task for the target resource, and the trigger operation on the target adjustment control is a trigger operation on the target adjustment control detected by the first terminal for the first time. After the first terminal exits the task page or exits the live-streaming room after displaying the task page for the first time, the first terminal displays the task page again in response to the trigger operation on the target adjustment control, and no longer adjusts the quantity of virtual resources required for updating the state of the target resource.

In the case that the first terminal receives the adjustment task information indicating the target adjustment task again, the first terminal displays the participation control based on the adjustment task information and displays the task page in response to the trigger operation on the participation control, and the first account no longer joins the resource quantity adjustment group initiated by the first account again and no longer adjusts the quantity of virtual resources required based on the trigger operation.

In some embodiments, the first terminal plays the first animation again in response to the trigger operation on the target adjustment control or in response to the trigger operation on the participation control. In some embodiments, text information representing the quantity of resources adjusted by the first account is displayed in the first animation. In some embodiments, text information representing the quantity of resources adjusted by the latest resource quantity adjustment operation, wherein the resource quantity adjustment operation is an operation of adjusting the quantity of virtual resources required for updating the state of the target resource in the first animation.

In some embodiments, the first terminal, after playing the first animation in response to the trigger operation on the target adjustment control, does not play the first animation any more in the case that the trigger operation on the target adjustment control is detected again within a reference duration. The reference duration takes the time when the terminal plays the first animation for the first time as a start time, and the reference duration can be flexibly configured as, for example, 3 minutes, or 5 minutes, or the like. In the case that the user performs the trigger operation on the target adjustment control again, there is no need to play the first animation repeatedly, which saves the time spent on entering the task page and improves the human-computer interaction efficiency.

In some embodiments, the first account has participated in the target adjustment task initiated by the second account, and the first terminal, in response to the trigger operation on the target adjustment control, displays the task page of the target adjustment task in the live-streaming room, such that after participating in the target adjustment task through the participation control, the user can also quickly enter the task page of the target adjustment task which he/she has participated in through the target adjustment control displayed in the live-streaming room, which improves the human-computer interaction efficiency.

In the above embodiments, prior to the second terminal responding to the trigger operation on the participation control, the third account has not initiated the adjustment task for the target resource or does not participate in the adjustment task for the target resource, and the trigger operation on the participation control is a resource quantity adjustment operation detected by the second terminal for the first time, wherein the resource quantity adjustment operation is configured to adjust the quantity of virtual resources required for updating the state of the target resource. In the case that the second terminal exists the task page or the live-streaming room after displaying the task page for the first time, the second terminal displays the task page in response to the trigger operation on the target adjustment control, and no longer adjusts the quantity of virtual resources required. In the case that the second terminal receives the adjustment task information, the second terminal displays the participation control based on the adjustment task information and displays the task page in response to the trigger operation on the participation control, and the third account no longer repeatedly joins the resource quantity adjustment group that the third account has joined and no longer adjusts the quantity of virtual resources required based on the trigger operation.

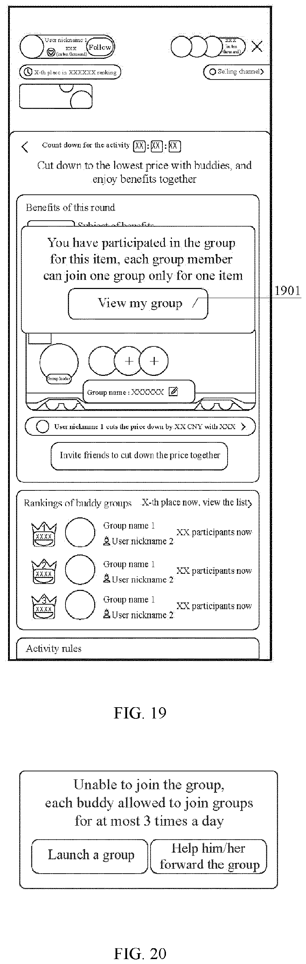

In some embodiments, the target adjustment task is initiated by a fourth account, and a fifth account and the fourth account are two different accounts. In the case that the third account has participated in the adjustment task for the target resource initiated by the fifth account, the second terminal displays participation rejection prompt box in the live-streaming room in response to the trigger operation on the participation control, wherein the participation rejection prompt box indicates that the third account cannot participate in the target adjustment task initiated by the fourth account. In some embodiments, participation rejection prompt box is shown in FIG. 19, the participation rejection prompt box has prompt information of "You have participated in the group for this item, each group member can join one group only for one item" displayed thereon.

In some embodiments, the participation rejection prompt box further includes a jump control, wherein the jump control indicates jumping to a task page of the adjustment task initiated by the fifth account for the target resource. The second terminal, in response to a trigger operation on the redirection control, jumps to the task page of the adjustment task initiated by the fifth account for the target resource. In the case that the user has participated in the adjustment task initiated by the fifth account, and the user enters the task page of the target adjustment task initiated by the fourth account by mistake, the user is allowed to quickly jump back to the task page of the adjustment task in which the user has participated through the jump control, thereby improving the human-computer interaction efficiency. In one example, with continued reference to FIG. 19, the jump control 1901 has text information of "View my groups" displayed thereon.

In some embodiments, the number of times for the user to participate in the resource adjustment class task is limited, and in the case that the number of times of participation does not reach an upper limit, a process similar to S405 is performed. Taking the second terminal as an example, the second terminal, in the case that the number of times of participation in the resource adjustment class task by the third account currently logged in does not reach the upper limit, displays the task page of the target adjustment task in the live-streaming room in response to the trigger operation on the participation control. The upper limit refers to a maximum number of resource adjustment class tasks in which the user can participate, and the upper limit can be flexibly configured, such as 3, 4, 5, or the like. In some embodiments, the limit for the number of times of participation is a limit for the number of times of participation within the reference duration, and the second terminal, in the case that the third account does not reach the upper limit for the number of times of participation in the resource adjustment class task within the reference duration, displays the task page of the target adjustment task in the live-streaming room in response to the trigger operation on the participation control. The reference duration can be flexibly configured, such as 1 day, or 1 week, or the like. In the case that the reference duration is 1 day and the upper limit is 3 times, the maximum number of times of participation in the resource adjustment class task for each account within one day is 3.

In some embodiments, in the case that the number of times of participation reaches the upper limit, users are also allowed to initiate the adjustment task or help other users forward the adjustment task information. In some embodiments, the second terminal, in the case that the number of times of participation in resource adjustment class task by the third account currently logged in reaches the upper limit, displays a task initiation control in the live-streaming room in response to the trigger operation on the participation control, wherein the task initiation control indicates initiating the adjustment task for the target resource. The second terminal, in response to the trigger operation on the task initiation control, displays the task page of the target adjustment task initiated by the third account through a process similar to S402.

In some embodiments, the second terminal, in the case that the number of times of participation in the resource adjustment class task by the third account currently logged in reaches the upper limit, displays a task forwarding control in the live-streaming room in response to the trigger operation on the participation control, wherein the task forwarding control indicates sending adjustment task information to other accounts, wherein the adjustment task information indicates the target adjustment task. The second terminal, in response to the trigger operation on the task forwarding control, sends the adjustment task information to other accounts through a process similar to S403.

In some embodiments, in the case that the number of times of participation in the resource adjustment class task reaches the upper limit, the second terminal displays a limit prompt box as shown in FIG. 20, wherein the limit prompt box has text information of "Unable to join the group, each buddy is allowed to join groups for at most 3 times a day" displayed thereon to prompt the user that the number of times of participation has reached the upper limit. The limit prompt box also has the task initiation control displayed thereon, wherein the task initiation control has text information of "Initiate a group" displayed thereon, prompting the user of initiating a resource quantity adjustment activity by himself/herself. The limit prompt box also has the task forwarding control displayed thereon, and the task forwarding control has text information of "Help him/her forward the group" displayed thereon, prompting the user of inviting other users to participate in the target adjustment task.

In some embodiments, with continued reference to FIG. 15, the task success page also has a second invitation control 1502 displayed thereon. In some embodiments, in the case that the task success page is a task success page displayed by the first terminal, the second invitation control has text information of "Ask friends to hit the top of the list" displayed thereon, wherein the first terminal is a terminal corresponding to the account initiating the target adjustment task. In the case that the task success page is a task success page displayed by the second terminal, the second invitation control has text information of "Ask friends to enjoy a group purchase price" displayed thereon, wherein the second terminal is a terminal corresponding to the account participating in the target adjustment task. The second invitation control is configured to invite other accounts to update the state of the target resource based on the target quantity, and the first terminal sends state update information to other accounts in response to a trigger operation on the second invitation control, wherein the state update information indicates updating the state of the target resource based on the target quantity. The process of the first terminal sending the state update information to other accounts is similar to the process of the first terminal sending the adjustment task information to the second terminal, which is not described in detail here.

In some embodiments, with continued reference to FIG. 17, the update success page also has a fourth invitation control 1702 displayed thereon. The fourth invitation control is configured to invite other accounts to update the state of the target resource based on the target quantity, and the first terminal sends the state update information to other accounts in response to a trigger operation on the fourth invitation control, wherein the state update information indicates updating the state of the target resource based on the target quantity. The process of the first terminal sending the state update information to other accounts is similar to the process of the first terminal sending the adjustment task information to the second terminal, which is not described in detail here.

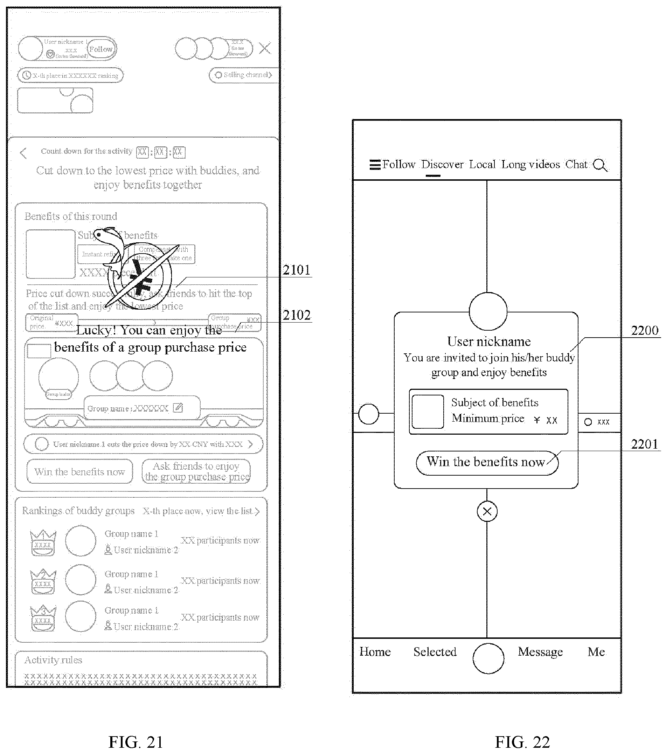

In some embodiments, the second terminal receives the state update information, displays the participation control based on the state update information, and displays the task success page in response to the trigger operation on the participation control. In some embodiments, the second terminal also plays a fourth animation in response to the trigger operation on the participation control, wherein the fourth animation is configured to indicate that the state of the target resource is updated based on the target quantity upon completion of the target adjustment. In one example, one frame in the fourth animation is shown in FIG. 21, in the fourth animation, a koi fish pattern 2101 and text information 2102 are displayed, wherein the koi fish pattern 2101 indicates completion of the target adjustment task, the text information 2102 indicates that the state of the target resource is updated based on the target quantity. The text information 2102 is "Lucky! You can enjoy the benefits of a group purchase price". In some embodiments, the second terminal displays the state update control based on the state update information, wherein the state update control indicates updating the state of the target resource based on the target quantity. The second terminal displays the state update page in which the state of the target resource is updated based on the target quantity in response to the trigger operation on the state update control. In some embodiments, based on the state update information, the second terminal displays a prompt box 2200 as shown in FIG. 22. The state update control 2201 is displayed in the prompt box 2200, and text information of "Win the benefits now" is displayed by the state update control 2201 to guide the user to purchase the target resource in the target quantity.

In some embodiments, in the case that the second terminal displays the participation control based on the adjustment task information upon completion of the target adjustment task, the second terminal displays the task success page in response to the trigger operation on the participation control and updates the state of the target resource based on the task success page and the target quantity. In some embodiments, the second terminal also plays the fourth animation in response to the trigger operation on the participation control upon completion of the target adjustment task. In some embodiments, the second terminal displays the state update control based on the adjustment task information upon completion of the target adjustment task, wherein the state update control indicates updating the state of the target resource based on the target quantity; and displays the state update page in which the state of the target resource is updated based on the target quantity in response to the trigger operation on the state update control.

In some embodiments, the first terminal or the second terminal, upon completion of the transaction, also guides an account not following the anchor account to follow the anchor account, attracting more followers to the anchor account. Taking the first terminal as an example, the first terminal displays following prompt information in response to the completion of the transaction, the following prompt information is configured to guide users to follow the anchor account in the live-streaming room.

In some embodiments, the first terminal or the second terminal, prior to displaying the task page, also determines whether an account is currently logged in. In the case that no account is currently logged in, a login page is jumped to guide the user to log in to the account, and the task page is jumped to in response to the completion of the login. In the case that an account has currently logged in, the task page is displayed.

In some embodiments, the first terminal or the second terminal, upon ending of the target adjustment task, displays a task end page of the target adjustment task in the live-streaming room in response to the trigger operation on the target adjustment control or a participation control, wherein the participation control is a control displaying based on the adjustment task information or the state update information, and the task end page indicates ending of the target adjustment task. The reasons of ending of the target adjustment task includes the inventory of the target resource being 0 and the target adjustment task reaching the end time thereof. In a target duration upon the ending of the target adjustment task, the target adjustment control is also displayed in the live-streaming room, such that the user can enter the task page and view the result of the task. The target duration takes the end time of the target adjustment task as the start time, and the target duration can be flexibly configured, such as 5 minutes, or 10 minutes, or the like. The target duration being 10 minutes means that the target adjustment control is also displayed in the live-streaming room within 10 minutes upon ending of the target adjustment task.

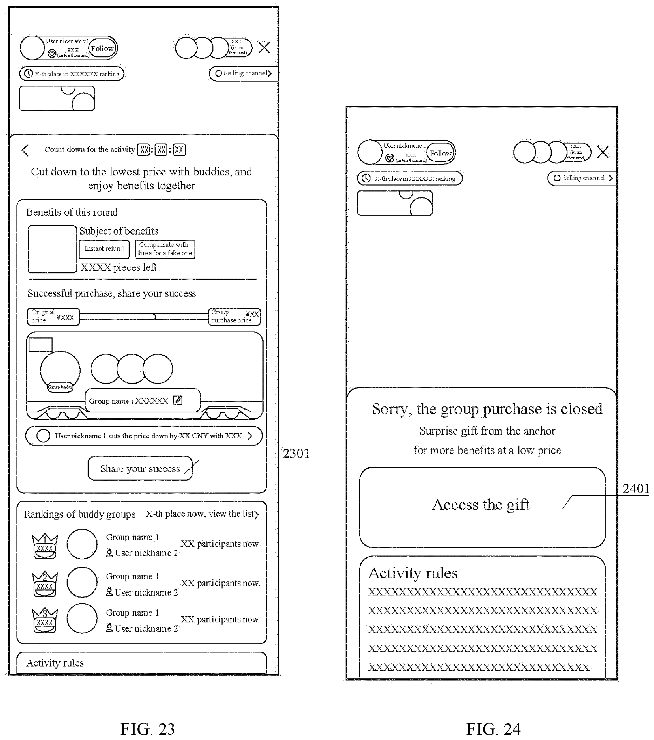

In one example, a terminal corresponding to an account with a successful transaction displays a task end page as shown in FIG. 23, wherein a result display control 2301 is displayed on the task end page, and text information of "Share your success" is displayed by the result display control, which indicates that the result display control is configured to share the result of participating in the target adjustment task.

In some embodiments, a terminal corresponding to the account with an unsuccessful transaction displays a task end page as shown in FIG. 24, wherein text information indicating the end of the activity is displayed in the task end page, and a jump link 2401 is also displayed in the task end page, wherein the redirection link 2401 is configured to jump to a display page for another resource. In the case that the target adjustment task is ended due to the inventory being 0, the text information displayed on the task end page is "Sorry, no benefits left"; and in the case that the target adjustment task is ended due to reaching the end time thereof, the text information displayed in the task end page is "Sorry, the group purchase has ended".

In some embodiments, a quantity adjustment record is also displayed on the task page, and the quantity adjustment record includes a quantity of resources corresponding to each account, wherein the quantity of resources corresponding to each account is a quantity of resources adjusted based on a resource adjustment operation of each account, and the resource adjustment operation is configured to adjust the quantity of virtual resources required for updating the state of the target resource. In some embodiments, the first terminal displays the quantity adjustment record on the task page. In some embodiments, the first terminal displays the latest quantity adjustment record on the task page. In some embodiments, the first terminal displays a plurality of quantity adjustment records alternately and periodically on the task page, wherein the period can be flexibly configured, for example, the period is 5 seconds, or 10 seconds, or the like.

In some embodiments, referring to FIG. 7, a quantity adjustment record 706 is displayed on the task page, the quantity adjustment record 706 includes a user name 1, wherein the user name 1 is a user nickname of the account for adjusting the quantity of virtual resource required. The quantity adjustment record 706 also includes the name of the "virtual price-cutting tool" used for adjusting the quantity and the quantity of resources adjusted, and the quantity adjustment record 706 is displayed as "User nickname 1 cuts the price down by Y CNY with D", wherein "D" represents the "virtual price-cutting tool", and "Y" represents the quantity of resources.

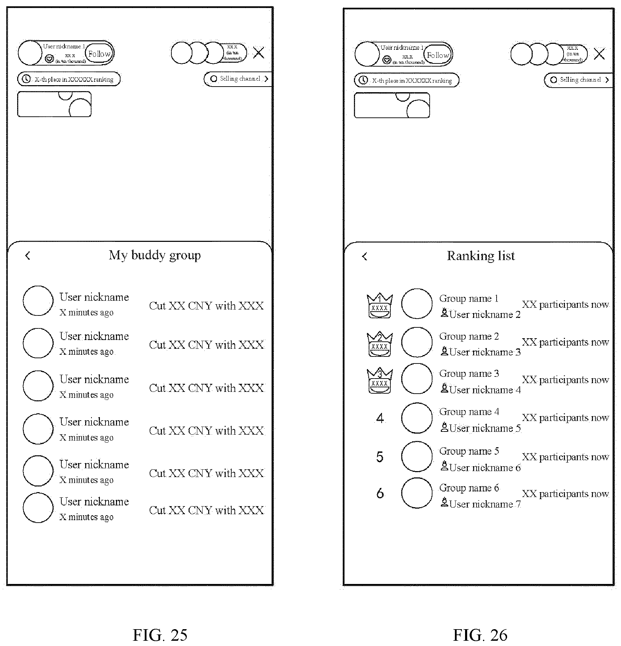

In some embodiments, a record unfolding control is also displayed on the task page, and the first terminal displays a record list page in response to a trigger operation on the record unfolding control. In some embodiments, the record list page is as shown in FIG. 25, wherein a plurality of quantity adjustment records corresponding to the target adjustment task are displayed in the record list page; the plurality of quantity adjustment records are arranged in chronological order, and the quantity adjustment records closer to the current time rank nearer the top on the list. The quantity adjustment records include the avatar of the account participating or initiating the target adjustment task, a time gap between the current time and the time of participating or initiating the target adjustment task, and text information, wherein the text information is configured to represent the quantity of resources adjusted. In the case that any account participates in the target adjustment task prior to the completion of the target adjustment task, text information corresponding to the account is "User nickname of the account cuts the price down by XX CNY with XXX". In the case that any account participates in the target adjustment task after the completion of the target adjustment task, the text information corresponding to the account is "Join the buddy group for the group purchase price."

In some embodiments, with continued reference to FIG. 7, a ranking of resource quantity adjustment groups 707 is also displayed on the task page 700. The ranking indicates the rankings of a plurality of resource quantity adjustment groups for the target resource. The plurality of resource quantity adjustment groups are ranked in descending order according to the number of accounts having participated in the task, and the resource quantity adjustment group with more accounts participating in the task is ranked higher. Due to a limited region of display on the page, only some of the resource quantity adjustment groups are shown in the ranking in the case of a large number of resource quantity adjustment groups. Names of the resource quantity adjustment groups, avatars of group leaders of the resource quantity adjustment groups, user nicknames of the group leaders, and the number of accounts having participated in each of the resource quantity adjustment groups are displayed in the ranking. In some embodiments, a ranking unfolding control is also displayed on the task page, and the first terminal displays a ranking list page in response to a trigger operation on the ranking unfolding control. In one example, a ranking list page is as shown in FIG. 26.

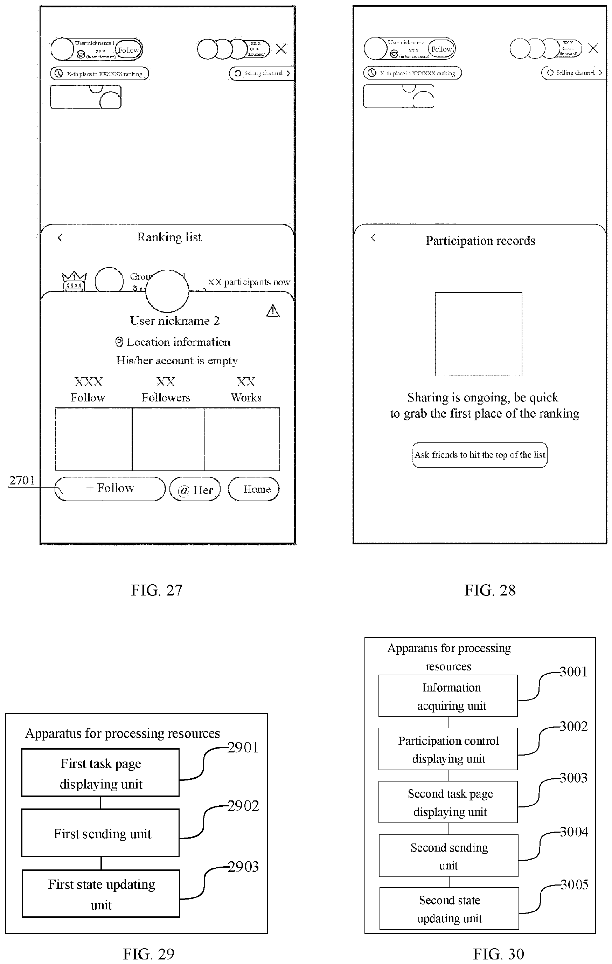

In some embodiments, the avatar or user nickname of the group leader in the ranking is an interactive control, and the first terminal displays a profile page of the group leader in response to a trigger operation on the avatar or user nickname of the group leader. In one example, the profile page of the group leader is shown in FIG. 27, wherein the profile page includes a following control 2701 indicating following the account corresponding to the group leader. The ranking can encourage users to keep on inviting other users to participate in the target adjustment task, to realize continuous proliferation of the number of participating users, which effectively increases the number of users attracted by the activities.

In some embodiments, in the case that the number of accounts having participated in each of the plurality of resource quantity adjustment groups is less than 1, the ranking is empty. A ranking list page is as shown in FIG. 28, and the ranking list page has text information of "Sharing is ongoing, be quick to grab the first place of the ranking!" displayed thereon. A fifth invitation control is also displayed on the ranking list page and indicates inviting other users to participate in the target adjustment task, and text information of "Ask friends to hit the top of the list" is displayed in the fifth invitation control. The process of the terminal sending the adjustment task information to other accounts in response to a trigger operation on the fifth invitation control is similar to the process of the first terminal sending the adjustment task information to the second terminal in response to the trigger operation on the first invitation control.

To implement the resource quantity adjustment activity clearer, the following description is provided with reference to FIG. 6, after the anchor starts the live streaming and initiates the resource quantity adjustment activity, some users perform trigger operation on the target adjustment control displayed in the live-streaming room, then the price is cut down automatically, groups are formed, and the users become the group leaders of the resource quantity adjustment groups. By sharing the resource quantity adjustment activity with friends, the group leader invites other users to participate in the resource quantity adjustment activity, to adjust the quantity of virtual resources required for updating the state of the target resource to the target quantity, that is, cutting down to the lowest price. An invited user enters the group, cuts down the price automatically, and participates in the resource quantity adjustment activity; and then, the invited user can also share the resource quantity adjustment activity with a user to cut down to the lowest price. At the lowest price, an order can be placed for a transaction, and a community can be created based on the resource quantity adjustment group, which facilitates the subsequent cooperation and participation in activities. The group leader of the resource quantity adjustment group is a sharer for a first proliferation, the group members who are invited by the group leader to join the resource quantity adjustment group is a sharer for a second proliferation, and the group members can invite other users to realize a third proliferation of users, which effectively attracts more users to participate in live-streaming shopping.

In the related art, a merchant attracts users to shop in a live-streaming room by holding a time-limited sale, or a lottery activity, or the like. However, users can find the ongoing activity after entering the live-streaming room, and users who do not enter the live-streaming room is difficult to find the ongoing activity or participate in the live-streaming shopping through the activity, leading to low human-computer interaction efficiency in the process of live-streaming room shopping of the users.

In the technical solutions according to the embodiments of the present disclosure, a novel live-streaming shopping solution incorporating group purchase and price-cutting based on a live-streaming room for e-commerce is provided, the participation experience of users is better by cutting down the prices and a psychological burden on users due to sharing invitations is reduced, such that the resource can be purchased at a low price by all the group members once the group meets the minimum standard for grouping, which is taken as an incentive for users to invite friends to form groups and enjoy the benefits of a low price. After several rounds of invitations and sharing, proliferations of the number of users are possible, more users are attracted to the live-streaming shopping platform and to participate in the live-streaming shopping, which lays a solid foundation for the transformation of more users into e-commerce live-streaming users.

FIG. 29 is a block diagram of an apparatus for processing resources according to an exemplary embodiment. Referring to FIG. 29, the apparatus for processing resources includes:
a first task page displaying unit 2901, configured to display, in response to a trigger operation on a target adjustment control in a live-streaming room, a task page of a target adjustment task in the live-streaming room, wherein the task page has participation prompt information and a first invitation control displayed thereon, wherein the participation prompt information indicates an operation required to be performed to complete the target adjustment task upon completion of the trigger operation, the target adjustment task is to adjust a quantity of virtual resources to a target quantity for updating a state of the target resource, and the first invitation controls configured to invite other one or more accounts to participate in the target adjustment task; and the target adjustment control is configured to adjust the quantity of virtual resources required for updating the state of the target resource;
a first sending unit 2902, configured to send, in response to a trigger operation on the first invitation control, adjustment task information indicating the target adjustment task to other accounts; and
a first state updating unit 2903, configured to update upon completion of the target adjustment task, the state of the target resource based on the target quantity.

In the technical solution according to the embodiment of the present disclosure, the target adjustment control is displayed in the live-streaming room, such that a user is allowed to adjust the quantity of virtual resources required to acquire the target resource. After the user performs the trigger operation on the target adjustment control, the task page of the target adjustment task is displayed. Since the target adjustment task is to adjust the quantity of virtual resources required for updating the state of the target resource to the target quantity, the target resource can be acquired in the target quantity upon completion of the target adjustment task, such that displaying the participation prompt information and the first invitation control on the task page can effectively encourage the user to invite other users to complete the target adjustment task, and the invited users can quickly find an activity of acquiring the target resource in the target quantity of virtual resources based on the adjustment task information sent by the user, without searching randomly, which reduces the time cost for the users to find the activity of resource quantity adjustment and improves the human-computer interaction efficiency in the process of the users shopping in live-streaming rooms.

In some embodiments, the first task page displaying unit 2901 is configured to display, in the case that a first account has not initiated an adjustment task for the target resource, and the first account is not participating in an adjustment task for the target resource initiated by a second account, the task page of the target adjustment task initiated by the first account in the live-streaming room in response to the trigger operation on the target adjustment control, wherein the first account is an account currently logged in.

In some embodiments, the first task page displaying unit 2901 is configured to display, in the case that the first account has participated in a target adjustment task initiated by the second account, the task page of the target adjustment task in the live-streaming room in response to the trigger operation on the target adjustment control, wherein the first account is an account currently logged in.

In some embodiments, the participation prompt information includes a resource quantity adjustment progress, and the resource quantity adjustment progress is displayed based on an adjusted quantity of virtual resources, a quantity of virtual resources adjusted by the current trigger operation, a quantity of virtual resources initially required for the target resource, and the target quantity.

In some embodiments, the participation prompt information includes a plurality of subtask labels, and the plurality of subtask labels includes a first subtask label, at least one second subtask label, and at least one third subtask label;
wherein the first subtask label is configured to display the target quantity;
each second subtask label is configured to display a quantity corresponding to a history adjustment operation, wherein the history adjustment operation is an operation of adjusting the quantity of the required virtual resource in history, and the quantity corresponding to the history adjustment operation is a quantity of required virtual resources after adjustment; and
the third subtask label is configured to display a quantity pending state, and after a third account having not participated in the target adjustment task now participates in the target adjustment task, the third subtask label is updated from the quantity pending state to an quantity corresponding to a task participating operation, wherein the task participating operation refers to an operation of the third account participating in the target adjustment task, and the quantity corresponding to the task participating operation is an quantity of required virtual resources which is adjusted based on the task participating operation.

In some embodiments, the participation prompt information includes a number of accounts of potential participants, wherein the number of accounts of potential participants is determined based on a target number of accounts and a number of accounts having participated in the target adjustment task, and the target number of accounts is a number of accounts required to participate in triggering completion of the target adjustment task.

In some embodiments, the first state updating unit 2903 includes:
a task success page displaying subunit, configured to display, upon completion of the target adjustment task, a task success page in response to the trigger operation on the target adjustment control, wherein the task success page is configured to guide updating of the state of the target resource; and
a state updating subunit, configured to update the state of the target resource based on the task success page and the target quantity.

In some embodiments, the task success page has a second invitation control displayed thereon, wherein the second invitation control is configured to invite other accounts to update the state of the target resource based on the target quantity;
the first sending unit 2902 is further configured to send state update information to other accounts in response to a trigger operation on the second invitation control, wherein the state update information indicates that the state of the target resource is updated based on the target quantity.

In some embodiments, the apparatus for processing resources further includes:
a success page displaying unit, configured to display an update success page upon completion of the state update, wherein the update success page has a result display control displayed thereon; and
a target picture displaying unit, configured to display a target picture in response to a trigger operation on the result display control, wherein the target picture is configured to display a result of the target adjustment task.

In some embodiments, the apparatus for processing resources further includes:
a configuration control displaying unit, configured to display at least one display configuration control of the target picture, wherein each display configuration control indicates one display mode of the target picture; and
a picture processing unit, configured to process the target picture in response to a trigger operation on any display configuration control of the at least one display configuration control based on a display mode corresponding to the triggered display configuration control.

In some embodiments, the at least one display configuration control includes a home page display control, wherein the home page display control indicates that the target picture is displayed on a home page displayed upon application startup;
the picture processing unit is configured to display the target picture on the home page in response to a trigger operation on the home page display control.

In some embodiments, the apparatus for processing resources further includes:
a task end page displaying unit, configured to display, upon ending of the target adjustment task, a task end page of the target adjustment task in the live-streaming room in response to the trigger operation on the target adjustment control, wherein the task end page indicates ending of the target adjustment task.

FIG. 30 is a block diagram of the apparatus for processing resources according to an exemplary embodiment. With reference to FIG. 30, the apparatus for processing resources includes:
an information acquiring unit 3001, configured to acquire adjustment task information of a live-streaming room, wherein the adjustment task information indicates a target adjustment task for a target resource in the live-streaming room, and the target adjustment task is to adjust a quantity of virtual resources to a target quantity for updating a state of the target resource;
a participation control displaying unit 3002, configured to display a participation control based on the adjustment task information, wherein the participation control indicates participation in the target adjustment task;
a second task page displaying unit 3003, configured to display, in response to a trigger operation on the participation control, a task page of the target adjustment task in the live-streaming room, wherein the task page has participation prompt information and a third invitation control displayed thereon, wherein the participation prompt information indicates an operation required to be performed to complete the target adjustment task upon completion of the trigger operation, and the third invitation control is configured to invite other one or more accounts to participate in the target adjustment task;
a second sending unit 3004, configured to send, in response to a trigger operation on the third invitation control, the adjustment task information to other accounts; and
a second state updating unit 3005, configured to update, upon completion of the target adjustment task, the state of the target resource based on the target quantity.

In the apparatus for processing resources according to the embodiment of the present disclosure, since the target adjustment task is to adjust the quantity of virtual resources required for updating the state of the target resource to the target quantity, the participation control is displayed in response to the adjustment task information being acquired, such that a user can be guided to participate in the target adjustment task indicated by the adjustment task information, and can quickly find an activity of acquiring the target resource in the target quantity of virtual resources. After the user performs the trigger operation on the participation control, the task page of the target adjustment task is displayed. Since the target adjustment task is completed, the target resource can be acquired in the target quantity of virtual resources, such that displaying the participation prompt information and the third invitation control on the task page can effectively encourage the user to invite users to complete the target adjustment task, and the invited users can quickly find an activity of acquiring the target resource in the target quantity of virtual resources based on the adjustment task information sent by the user, without searching randomly, which reduces the time cost for the other users to find the activity of resource quantity adjustment and improves the human-computer interaction efficiency in the process of the users shopping in live-streaming rooms.

In some embodiments, the second task page displaying unit 3003 is configured to:
display, in the case that a third account is not participating in an adjustment task initiated by any account for the target resource, the task page of the target adjustment task in the live-streaming room in response to the trigger operation on the participation control, wherein the third account is an account currently logged in.

In some embodiments, the target adjustment task is initiated by a fourth account, and the apparatus for processing resources further includes:
a participation rejection prompt information displaying unit, configured to display, in the case that a third account has participated in an adjustment task initiated by a fifth account for the target resource, a participation rejection prompt box in the live-streaming room in response to the trigger operation on the participation control, wherein the participation rejection prompt box indicates that the third account is not allowed to participate in the target adjustment task initiated by the fourth account, wherein the third account is an account currently logged in.

In some embodiments, the participation rejection prompt box further includes a jump control, wherein the jump control indicates jumping to a task page of an adjustment task initiated by the fifth account for the target resource.

In some embodiments, the second task page displaying unit 3003 is configured to:
display, in the case that a number of times of participation in resource adjustment class task by a third account do not reach an upper limit, the task page of the target adjustment task in the live-streaming room in response to the trigger operation on the participation control, wherein the third account is an account currently logged in.

In some embodiments, the apparatus for processing resources further includes:
a task initiation control displaying unit, configured to display, in the case that the number of times of participation in resource adjustment class task by a third account reaches the upper limit, a task initiation control in the live-streaming room in response to the trigger operation on the participation control, wherein the task initiation control indicates initiating an adjustment task for the target resource, wherein the third account is an account currently logged in.

In some embodiments, the apparatus for processing resources further includes:
a task success page displaying unit, configured to display, upon completion of the target adjustment task, a task success page in response to the trigger operation on the participation control, wherein the task success page is configured to guide updating of the state of the target resource; and
the second state updating unit 3005 is further configured to update the state of the target resource based on the task success page and the target quantity.

In some embodiments, the apparatus for processing resources further includes:
a state update control displaying unit, configured to display, upon completion of the target adjustment task, a state update control based on the adjustment task information, wherein the state update control indicates that the state of the target resource is updated based on the target quantity; and
the second state updating unit 3005 is further configured to display a state update page in response to a trigger operation on the state update control, wherein in the state update page, the state of the target resource is updated based on the target quantity.

It should be noted that in resource processing, the apparatus for processing resources according to the above-mentioned embodiments is merely illustrated by the respective roles of the above-mentioned various functional modules. In practice, the above-mentioned function can be performed by different functional modules as appropriate, that is, by dividing an internal structure of the terminal into different functional modules to perform all or some of the functions described above. In addition, the apparatus for processing resources according to the above-mentioned embodiments belongs to the same concept as the embodiments of the method for processing resources, and a detailed implementation thereof can be seen in the embodiments of the method, which is not described in detail here.

A terminal is provided in the embodiments of the present disclosure. The terminal includes one or more processors, and a memory for storing one or more instructions executable by the processors; wherein the one or more instructions, when loaded and executed by the processors, cause the processors to perform the method for processing resources as described in each of the above embodiments.

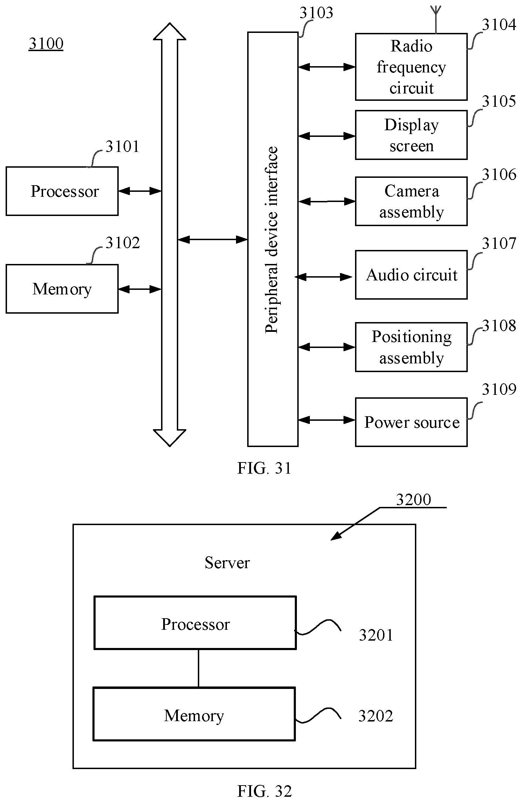

FIG. 31 is a block diagram of a terminal according to an exemplary embodiment. In some embodiments, a terminal 3100 can be a portable mobile terminal, such as a smartphone, a tablet computer, a moving picture experts group audio layer III (MP3) player, a moving picture experts group audio layer IV (MP4) player, a laptop, or a desktop computer. The terminal 3100 may also be called a user device, a portable terminal, a laptop terminal, a desktop terminal, or the like.

Generally, the terminal 3100 includes a processor 3101 and a memory 3102.

In some embodiments, the processor 3101 includes one or more processing cores, such as a 4-core processor and an 8-core processor. In some embodiments, the processor 3101 is implemented by at least one of the hardware forms of a digital signal processor (DSP), a field-programmable gate array (FPGA), and a programmable logic array (PLA). In some embodiments, the processor 3101 also includes a main processor and a co-processor, wherein the main processor is a processor for processing data in an awake state, which is also called a central processing unit (CPU). The co-processor is a low-power-consumption processor for processing data in a standby state. In some embodiments, the processor 3101 is integrated with a graphics processing unit (GPU), which is configured to render and draw the content that needs to be displayed by a display screen. In some embodiments, the processor 3101 also includes an Artificial Intelligence (AI) processor configured to process computational operations related to machine learning.

In some embodiments, the memory 3102 includes one or more computer-readable storage media. In some embodiments, the memory 3102 is non-transitory. In some embodiments, the memory 3102 also includes high-speed random access memory, as well as a non-volatile memory, such as one or more magnetic disk storage devices and flash memory storage devices. In some embodiments, a non-transitory computer-readable storage medium in the memory 3102 is configured to store at least one instruction configured to be executed by processor 3101 to perform the method for processing resources according to method embodiments of the present disclosure.

In some embodiments, the terminal 3100 also includes a peripheral device interface 3103 and at least one peripheral device. In some embodiments, the processor 3101, the memory 3102, and the peripheral device interface 3103 is connected by a bus or a signal line. Each peripheral device is connected to the peripheral device interface 3103 via a bus, a signal line, or a circuit board. In some embodiments, the peripheral device includes at least one of a radio frequency circuit 3104, a display screen 3105, a camera assembly 3106, an audio circuit 3107, a positioning assembly 3108, and a power source 3109.

In some embodiments, the peripheral device interface 3103 is configured to connect at least one peripheral device associated with an input/output (I/O) to the processor 3101 and the memory 3102. In some embodiments, the processor 3101, the memory 3102, and the peripheral device interface 3103 are integrated on the same chip or circuit board. In some other embodiments, any one or two of the processor 3101, the memory 3102, and peripheral device interface 3103 may be implemented on a separate chip or circuit board, which is not limited to the embodiments herein of the present disclosure.

The radio frequency circuit 3104 is configured to receive and transmit a radio frequency (RF) signal, which is also referred to as an electromagnetic signal. The radio frequency circuit 3104 is communicated with a communication network and other communication devices via the electromagnetic signal. The radio frequency circuit 3104 converts an electrical signal into an electromagnetic signal for transmission or converts the received electromagnetic signal into an electrical signal. In some embodiments, the radio frequency circuit 3104 includes an antenna system, an RF transceiver, one or more amplifiers, a tuner, an oscillator, a digital signal processor, a coder/decoder (codec) chipset, a subscriber identity module (SIM) card, and the like. In some embodiments, the radio frequency circuitry 3104 is communicated with other terminals in accordance with at least one wireless communication protocol. The wireless communication protocol includes, but is not limited to, World Wide Web, a metropolitan area network, an intranet, various generations of mobile communication networks (2G, 3G, 4G, and 5G), a wireless local area network, and/or a wireless fidelity (Wi-Fi) network. In some embodiments, the radio frequency circuitry 3104 also includes a near-field communication (NFC) related circuit, which is not limited to the present disclosure.

The display screen 3105 is configured to display a user interface (UI). In some embodiments, the UI may include graphics, text, icons, video, and any combination thereof. In the case that the display screen 3105 is a touch display screen, the display screen 3105 can also acquire a touch signal on or over the surface of the display screen 3105. The touch signal may be input into the processor 3101 as a control signal for processing. In this case, display screen 3105 is also configured to provide virtual buttons and/or virtual keyboards, which are also referred to as soft buttons and/or soft keyboards. In some embodiments, one display screen 3105 is disposed on a front panel of the terminal 3100. In some other embodiments, at least two display screens 3105 are disposed on different surfaces of the terminal 3100 respectively or in a folded design. In some other embodiments, display screen 3105 is a flexible display screen disposed on a bending or folded surface of the terminal 3100. Moreover, the display screen 3105 has an irregular shape other than a rectangle, that is, the display screen 3105 may be irregular-shaped. In some embodiments, the display screen 3105 is a liquid crystal display (LCD) screen, an organic light-emitting diode (OLED) screen, or the like.

The camera assembly 3106 is configured to capture images or video. In some embodiments, the camera assembly 3106 includes a front camera and a rear camera. Usually, the front camera is arranged on the front panel of the terminal 3100 and the rear camera is arranged on the back surface of the terminal 3100. In some embodiments, at least two rear cameras are arranged, each of the at least two rear cameras is at least one of a main camera, a depth-of-field camera, a wide-angle camera, and a telephoto camera, to realize a background blurring function realized by fusion of the main camera and the depth-of-field camera, panoramic shooting and virtual reality (VR) shooting functions by fusion of the main camera and the wide-angle camera, or other fusion shooting functions. In some embodiments, the camera assembly 3106 also includes a flashlight. The flashlight is a mono-color temperature flashlight or a two-color temperature flashlight. The two-color temperature flashlight is a combination of a warm flashlight and a cold flashlight that can be used for light compensation at different color temperatures.

In some embodiments, the audio circuit 3107 includes a microphone and a loudspeaker. The microphone is configured to capture sound waves from user and the environment, and convert the sound waves to electrical signals which are input to the processor 3101 for processing, or input to the radio frequency circuit 3104 for voice communication. In some embodiments, for stereo acquisition or noise reduction, a plurality of microphones are provided at different parts of the terminal 3100. In some embodiments, the microphone is also an array microphone or an omnidirectional acquisition microphone. The loudspeaker is configured to convert electrical signals from the processor 3101 or the radio frequency circuit 3104 to sound waves. The loudspeaker is a conventional film loudspeaker or a piezoelectric ceramic speaker. In the case that the loudspeaker is the piezoelectric ceramic speaker, the electrical signals can be converted into not only human-audible sound waves but also the sound waves which are inaudible to humans for ranging and the like. In some embodiments, the audio circuit 3107 also includes a headphone jack.

The positioning assembly 3108 is configured to locate the current geographic location of the terminal 3100 to implement navigation or a location-based service (LBS). In some embodiments, the positioning assembly 3108 is the United States' global positioning system (GPS), China's BeiDou navigation satellite system (BDS), and the European Union's Galileo system.

The power source 3109 is configured to supply power for various components in the terminal 3100. In some embodiments, the power source 3109 may be an alternating current, a direct current, a disposable battery, or a rechargeable battery. In the case that the power source 3109 includes the rechargeable battery, the rechargeable battery is a wired rechargeable battery or a wireless rechargeable battery. The wired rechargeable battery is a battery charged via a wired line, and the wireless rechargeable battery is a battery charged via a wireless coil. The rechargeable battery can also support the fast-charging technology.

It should be understood by those skilled in the art that the structure shown in FIG. 31 does not constitute a limitation on the terminal 3100. In some embodiments, the terminal 3100 includes more or fewer components than those shown, or may combine certain components, or adopt a different arrangement of components.

FIG. 32 is a block diagram of a server according to an exemplary embodiment, the server 3200 can vary widely in configuration or performance. In some embodiments, the server 3200 includes one or more central processing units (CPUs) 3201 and one or more memories 3202 configured for storing one or more executable instructions. The one or more executable instructions, when loaded and executed by the one or more central processing units 3021, cause the one or more central processing units 3021 to perform the method for processing resources in the various method embodiments described above. In some embodiments, the server also has components such as a wired or wireless network interface, a keyboard, and an input/output interface for input/output. In some embodiments, the server also includes other components for implementing device functions, which are not described in detail here.

In an exemplary embodiment, a computer-readable storage medium including one or more instructions is also provided, such as the memory 3202 including one or more instructions. The above-mentioned instructions, when loaded and executed by the processor 3201 of the server 3200, cause the server 3200 to perform the method for processing resources in the various method embodiments described above, or, when loaded and executed by the processor 3101 of the server 3100, cause the server 3100 to perform the method for processing resources in the various method embodiments described above. In some embodiments, the computer-readable storage medium may be a read-only memory (ROM), a random-access memory (RAM), a compact disc read-only memory, (CD-ROM), a magnetic tape, a floppy disk, an optical data storage device, and the like.

In an exemplary embodiment, a computer program product including a computer program is provided, wherein the computer program product, when loaded and run by a processor, causes the processor to perform the method for processing resources in the various method embodiments described above.

All the embodiments of the present disclosure can be practiced individually or in combination with other embodiments, which are all regarded as the scope of protection required by the present disclosure.

## Claims

1. A method for processing resources, **characterized by**, executed by a first terminal, comprising:
displaying (S201), in response to a trigger operation on a target adjustment control in a live-streaming room, a task page of a target adjustment task in the live-streaming room, wherein the task page has participation prompt information and a first invitation control displayed thereon, wherein the participation prompt information indicates an operation required to be performed to complete the target adjustment task upon completion of the trigger operation, the target adjustment task is to adjust a quantity of virtual resources required for updating a state of a target resource to a target quantity, and the first invitation control is configured to invite other one or more accounts to participate in the target adjustment task; and the target adjustment control is configured to adjust the quantity of virtual resources required for updating the state of the target resource;
sending (S202), in response to a trigger operation on the first invitation control, adjustment task information indicating the target adjustment task to other accounts; and
updating (S203), upon completion of the target adjustment task, the state of the target resource based on the target quantity.

2. The method according to claim 1, wherein said displaying, in response to the trigger operation on the target adjustment control in the live-streaming room, the task page of the target adjustment task in the live-streaming room comprises:
displaying, in the case that a first account has not initiated an adjustment task for the target resource, and the first account is not participating in an adjustment task for the target resource initiated by a second account, the task page of the target adjustment task initiated by the first account in the live-streaming room in response to the trigger operation on the target adjustment control, wherein the first account is an account currently logged in.

3. The method according to claim 1 or 2, wherein said displaying, in response to the trigger operation on the target adjustment control in the live-streaming room, the task page of the target adjustment task in the live-streaming room comprises:
displaying, in the case that a first account has participated in a target adjustment task initiated by a second account, the task page of the target adjustment task in the live-streaming room in response to the trigger operation on the target adjustment control, wherein the first account is an account currently logged in.

4. The method according to any preceding claim, wherein the participation prompt information comprises a plurality of subtask labels, and the plurality of subtask labels comprises a first subtask label, at least one second subtask label, and at least one third subtask label;
wherein the first subtask label is configured to display the target quantity;
each second subtask label is configured to display a quantity corresponding to a history adjustment operation, wherein the history adjustment operation is an operation of adjusting a quantity of a required virtual resource in history, and the quantity corresponding to the history adjustment operation is a quantity of required virtual resources after adjustment; and
the third subtask label is configured to display a quantity pending state, and after a third account having not participated in the target adjustment task now participates in the target adjustment task, the third subtask label is updated from the quantity pending state to an quantity corresponding to a task participating operation, wherein the task participating operation refers to an operation of the third account participating in the target adjustment task, and the quantity corresponding to the task participating operation is an quantity of required virtual resources which is adjusted based on the task participating operation.

5. The method according to any preceding claim, wherein said updating, upon completion of the target adjustment task, the state of the target resource based on the target quantity comprises:
displaying, upon completion of the target adjustment task, a task success page in response to the trigger operation on the target adjustment control, wherein the task success page is configured to guide updating of the state of the target resource; and
updating the state of the target resource based on the task success page and the target quantity.

6. The method according to claim 5, wherein the task success page has a second invitation control displayed thereon, wherein the second invitation control is configured to invite other accounts to update the state of the target resource based on the target quantity; and
the method further comprises:
sending state update information to other accounts in response to a trigger operation on the second invitation control, wherein the state update information indicates that the state of the target resource is updated based on the target quantity.

7. The method according to any preceding claim, further comprising:
displaying an update success page upon completion of a state update, wherein the update success page has a result display control displayed thereon; and
displaying a target picture in response to a trigger operation on the result display control, wherein the target picture is configured to display a result of the target adjustment task.

8. A method for processing resources, **characterized by**, executed by a second terminal, comprising:
acquiring (S301) adjustment task information of a live-streaming room, wherein the adjustment task information indicates a target adjustment task for a target resource in the live-streaming room, and the target adjustment task is to adjust a quantity of virtual resources required for updating a state of the target resource to a target quantity;
displaying (S302) a participation control based on the adjustment task information, wherein the participation control indicates participation in the target adjustment task;
displaying (S303), in response to a trigger operation on the participation control, a task page of the target adjustment task in the live-streaming room, wherein the task page has participation prompt information and a third invitation control displayed thereon, wherein the participation prompt information indicates an operation required to be performed to complete the target adjustment task upon completion of the trigger operation, and the third invitation control is configured to invite other one or more accounts to participate in the target adjustment task;
sending (S304), in response to a trigger operation on the third invitation control, the adjustment task information to other accounts; and
updating (S305), upon completion of the target adjustment task, the state of the target resource based on the target quantity.

9. The method according to claim 8, wherein said displaying, in response to the trigger operation on the participation control, the task page of the target adjustment task in the live-streaming room comprises:
displaying, in the case that a third account is not participating in an adjustment task initiated by any account for the target resource, the task page of the target adjustment task in the live-streaming room in response to the trigger operation on the participation control, wherein the third account is an account currently logged in.

10. The method according to claim 8 or 9, wherein the target adjustment task is initiated by a fourth account, and the method further comprises:
displaying, in the case that a third account has participated in an adjustment task initiated by a fifth account for the target resource, a participation rejection prompt information in the live-streaming room in response to the trigger operation on the participation control, wherein the participation rejection prompt information indicates that the third account is not allowed to participate in the target adjustment task initiated by the fourth account, wherein the third account is an account currently logged in.

11. The method according to claim 10, the participation rejection prompt information further comprises a jump control, wherein the jump control indicates jumping to a task page of an adjustment task initiated by the fifth account for the target resource.

12. The method according to any of claims 8 to 11, further comprising:
displaying, upon completion of the target adjustment task, a task success page in response to the trigger operation on the participation control, wherein the task success page is configured to guide updating of the state of the target resource; and
updating the state of the target resource based on the task success page and the target quantity.

13. The method according to any of claims 8 to 12, further comprising:
displaying, upon completion of the target adjustment task, a state update control based on the adjustment task information, wherein the state update control indicates that the state of the target resource is updated based on the target quantity; and
displaying a state update page in response to a trigger operation on the state update control, wherein in the state update page, the state of the target resource is updated based on the target quantity.

14. An apparatus for processing resources, **characterized by**, comprising:
a first task page displaying unit (2901), configured to display, in response to a trigger operation on a target adjustment control in a live-streaming room, a task page of a target adjustment task in the live-streaming room, wherein the task page has participation prompt information and a first invitation control displayed thereon, wherein the participation prompt information indicates an operation required to be performed to complete the target adjustment task upon completion of the trigger operation, the target adjustment task is to adjust a quantity of virtual resources required for updating a state of a target resource to a target quantity, and the first invitation control is configured to invite other one or more accounts to participate in the target adjustment task; and the target adjustment control is configured to adjust the quantity of virtual resources required for updating the state of the target resource;
a first sending unit (2902), configured to send, in response to a trigger operation on the first invitation control, adjustment task information indicating the target adjustment task to other accounts; and
a first state updating unit (2903), configured to update, upon completion of the target adjustment task, the state of the target resource based on the target quantity.

15. An apparatus for processing resources, **characterized by**, comprising:
an information acquiring unit (3001), configured to acquire adjustment task information of a live-streaming room, wherein the adjustment task information indicates a target adjustment task for a target resource in the live-streaming room, and the target adjustment task is to adjust a quantity of virtual resources required for updating a state of the target resource to a target quantity;
a participation control displaying unit (3002), configured to display a participation control based on the adjustment task information, wherein the participation control indicates participation in the target adjustment task;
a second task page displaying unit (3003), configured to display, in response to a trigger operation on the participation control, a task page of the target adjustment task in the live-streaming room, wherein the task page has participation prompt information and a third invitation control displayed thereon, wherein the participation prompt information indicates an operation required to be performed to complete the target adjustment task upon completion of the trigger operation, and the third invitation control is configured to invite other one or more accounts to participate in the target adjustment task;
a second sending unit (3004), configured to send, in response to a trigger operation on the third invitation control, the adjustment task information to other accounts; and
a second state updating unit (3005), configured to update, upon completion of the target adjustment task, the state of the target resource based on the target quantity.
